# EUROPEAN PATENT SPECIFICATION

(11) **EP 0 435 775 B1**
(45) Date of publication and mention of the grant of the patent: **09.12.1998**
(21) Application number: 90403793.4
(22) Date of filing: 27.12.1990
(51) Int. Cl.: H04M 1/72

(54) **Cordless telephone**
Schnurloses Telefon
Téléphone sans fil

(30) Priority: 27.12.1989 JP 339232/89; 27.12.1989 JP 339239/89
(43) Date of publication of application: 03.07.1991
(73) Proprietor: SONY CORPORATION, Tokyo (JP)
(72) Inventor: Yamagata, Masato, Shinagawa-ku, Tokyo (JP); Tanaka, Yoshikazu, Shinagawa-ku, Tokyo (JP); Tsukada, Keizo, Shinagawa-ku, Tokyo (JP)
(74) Representative: Thévenet, Jean-Bruno

(56) References cited:
- EP-A- 0 265 944
- EP-A- 0 354 049
- PATENT ABSTRACTS OF JAPAN vol. 11, no. 83 (E-489)(2530) 13 March 1987 & JP-A-61 239 732
- PATENT ABSTRACTS OF JAPAN vol. 8, no. 161 (E-257)(1598) 26 July 1984 & JP-A-59 061 322
- PATENT ABSTRACTS OF JAPAN vol. 12, no. 217 (E-624)(3064) 21 June 1988 & JP-A-63 013 555
- PATENT ABSTRACTS OF JAPAN vol. 12, no. 440 (E-684)(3287) 18 November 1988 & JP-A-63 171 030
- PATENT ABSTRACTS OF JAPAN vol. 13, no. 16 (E-703)(3364) 13 January 1989 & JP-A-63 222 527

## Description

### BACKGROUND OF THE INVENTION

### Field of the Invention

The present invention generally relates to cordless telephones and, more particularly, to a cordless telephone in which a power consumption of a battery can be reduced.

### Description of the Prior Art

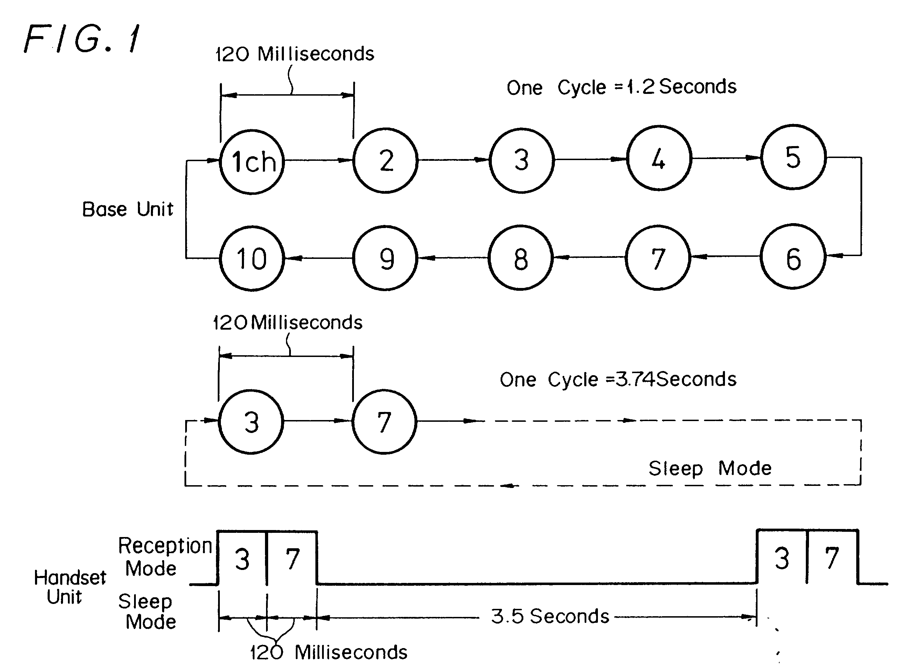

In the United States of America, 10 duplex channels from the first to tenth channels are prepared for the cordless telephone but no control channel is prepared. Further, in Japan, a cordless telephone of small power type is not provided with a control channel. For this reason, in the cordless telephone in which no control channel is prepared, a consumption of a battery of a handset unit is suppressed by a method of Fig. 1.

More specifically, as shown in Fig. 1, a base unit (master station) is operated by a commercially available AC power so that, in its standby mode, the first to tenth channels are sequentially received and monitored and that the reception and monitoring are repeatedly performed to await the connection request from the handset unit. At that time, a time necessary for detecting the connection request from the handset unit is 120 milliseconds per, for example, one channel. Accordingly, all the channels are repeatedly scanned at a cycle of about 1.2 seconds.

In the standby mode, the handset unit (remote station) receives and monitors, for example, the third and seventh channels to thereby check whether or not the connection request from the base unit exists. If there is no such connection request, then the handset unit enters a sleep mode of, for example, about 3.5 seconds. The operation of this cycle is repeatedly performed by the handset unit.

Accordingly, the handset unit is placed in the sleep mode during most of the period where it is in the standby mode. Therefore, the consumption of the battery can be suppressed.

Then, the arrangement and operation of such cordless telephone will hereinafter be described more fully. In the following explanation, the channels that the handset unit receives and monitors in the standby mode are the third and seventh channels.

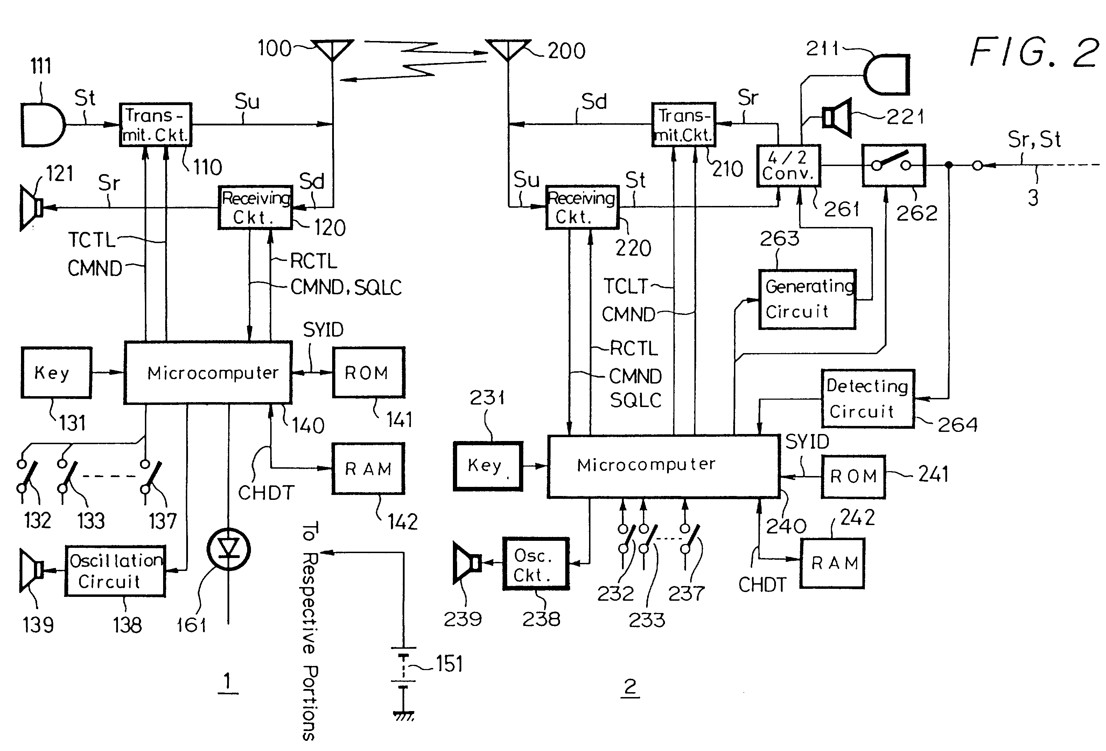

Fig. 2 shows the entire arrangement of the cordless telephone system which is mainly composed of a handset unit 1, a base unit 2 and a telephone line network 3 (external line).

In the handset unit 1, reference numeral 110 designates a transmitting circuit and 120 a receiving circuit. The transmitting circuit 110 converts a sound signal St and a command signal CMND (which will be explained more fully later) into an FM (frequency-modulated) signal Su of an up-channel and transmits the same. The receiving circuit 120 receives and demodulates an FM signal Sd of a down-channel to provide a sound signal Sr and the command signal CMND. Further, the receiving circuit 120 detects a limiter noise generated from, for example, an intermediate frequency amplifier to thereby generate a detection signal SQLC which indicates the presence or absence of the FM signal Sd of the down-channel.

Further, in the handset unit 1, reference numeral 131 designates a dial key and 132 a talk key. The talk key 132 is made as a non-lock type push switch and each time the talk key 132 is depressed, the handset unit 1 is alternately changed in mode between the standby mode and the talk mode. In the standby mode, the handset unit 1 is set in the standby mode for making an outgoing call from the handset unit 1 itself, and the handset unit 1 intermittently receives two channels in the down channel, in that case, the third and seventh channels shown in Fig. 1 and awaits the connection request from the base unit 2. In the talk mode, the handset unit 1 performs continuous reception and transmission between it and the base unit 2.

Reference numerals 133 to 137 designate auxiliary keys such as a hold key and the like formed of non-lock type push switches. Reference numeral 139 designates a speaker for a ringer and 140 a microcomputer which controls the entire system of the handset unit 1. By way of example, the microcomputer 140 might be a one-chip type general-purpose microcomputer, µPD75108 manufactured by NEC Corporation. The microcomputer 140 generates the command signal CMND which is transmitted by the transmitting circuit 110, and identifies the command signal CMND and the detection signal SQLC derived from the receiving circuit 120. Further, the microcomputer 140 generates control signals TCTL and RCTL that are used to permit and/or inhibit the transmission and reception of the transmitting circuit 110 and the receiving circuit 120, to designate the channel and to perform the muting.

Reference numerals 141 and 142 depict memories, and the memory 141 is a read only memory (ROM). The ROM 141 stores therein a system identifying code SYID of 25 bits that is used to identify this cordless telephone from other cordless telephones. The memory 142 is a random access memory (RAM), and this RAM 142 stores therein a channel data CHDT that indicates a channel received by the handset unit 1, for example, the third and seventh channels in the standby mode.

Reference numeral 151 designates a battery for power supply source, and this battery 151 is a rechargeable battery such as a nickel-cadmium battery. An output voltage from this battery 151 is supplied to respective portions of the handset unit 1 as an operation voltage. Reference numeral 161 depicts a light emitting diode (LED) which is flashed to indicate the hold state of the handset unit 1.

On the other hand, the base unit 2 includes a transmitting circuit 210 and a receiving circuit 220 which are substantially the same as the transmitting circuit 110 and the receiving circuit 120 of the handset unit 1. In the standby mode, the receiving circuit 220 awaits the incoming call from the telephone line network 3 and also is scanning all up-channels to receive a connection request from the handset unit 1 as shown in Fig. 1. In the talk mode, the base unit 2 performs continuous reception and transmission between it and the handset unit 1.

Further, in the base unit 2, reference numeral 211 designates a transmitter, 221 a receiver, 231 a dial key, 232 a switch for hook switch, 233 to 237 auxiliary keys such as a hold key and so on formed of non-lock type push switches, and 239 a speaker for ringer.

Reference numeral 240 designates a system control microcomputer, and this microcomputer 240 performs similar processings to those of the aforenoted microcomputer 140 and also controls the operation of the entire system of this cordless telephone. Similarly to the microcomputer 140, the microcomputer 240 might be a one-chip type general-purpose microcomputer, µPD75108 manufactured by NEC Corporation. Reference numerals 241 and 242 designate memories which correspond to the memories 141 and 142. The ROM 241 stores therein the system identifying code SYID and the RAM 242 stores therein the data CHDT indicative of the channel that the handset unit 1 receives and monitors.

Further, in the base unit 2, reference numeral 261 designates a two-line to four-line converting circuit, 262 a switch circuit that corresponds to a hook switch of a standard telephone set, 263 a generating circuit for generating a dial tone signal (i.e. DTFM signal), and 264 a detecting circuit for detecting a ring tone signal.

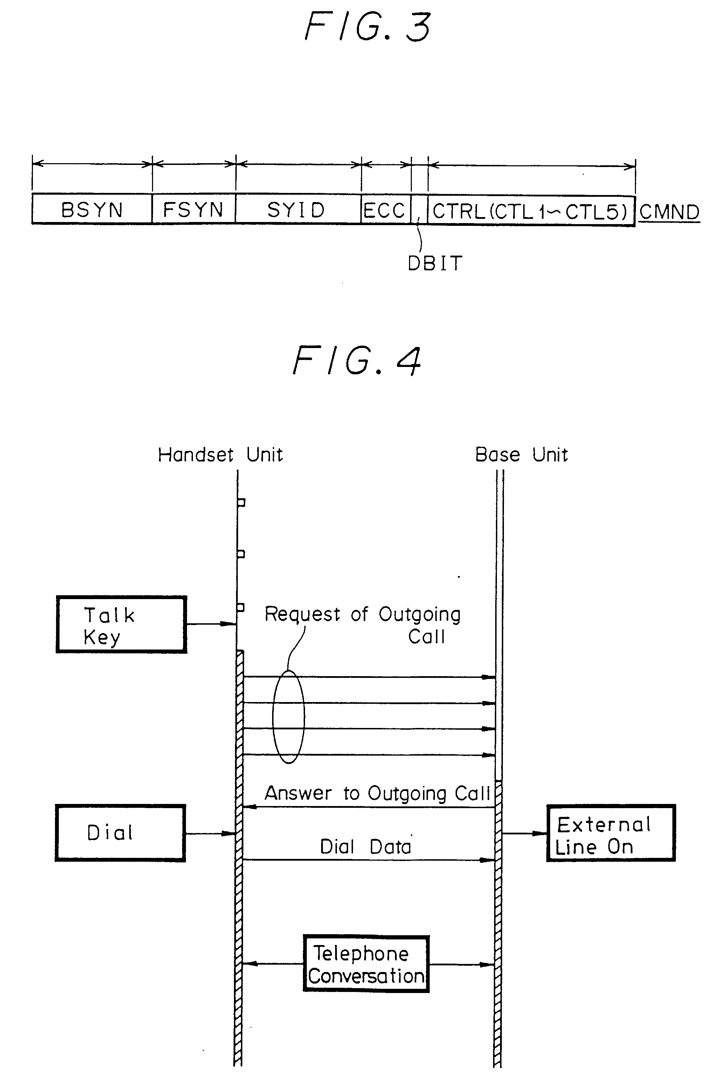

Fig. 3 shows an example of a signal format of the command signal CMND. This command signal CMND is formed of a bit synchronizing (sync.) signal BSYN of 24 bits at the head thereof and a frame sync. signal FSYN of 16 bits. In that case, the bit sync. signal BSYN and the frame sync. signal FSYN have specific bit patterns expressed as
BSYN = "101010 10"
FSYN = "1100010011010110"... up-channel
FSYN = "1001001100110110"... down-channel

Furthermore, the command signal CMND is composed of, after the signal FSYN, the system identifying code SYID of 25 bits, an error correction code ECC of 12 bits for this system identifying code SYID, a dummy bit DBIT of 3 bits and a control code CTRL of 5 bytes (40 bits), in that order.

In that case, in the control code CTRL of 5 bytes, its first byte CTL1 is a code indicative of the control contents of the handset unit 1 and the base unit 2, and its second byte CTL2 to fifth byte CTL5 are parameters, data and so on associated with the first byte CTL1.

When the handset unit 1 or the base unit 2 receives the command signal CMND, it is determined by the microcomputer 140 or 240 whether or not the identifying code SYID involved in the command signal CMND coincides with the identifying code SYID stored in the ROM 141 or 241. Only when they are coincident with each other, is the command signal CMND regarded as being valid, while when they are not coincident with each other, such command signal CMND is regarded as being invalid.

In the standby mode, the operations shown in Fig. 1 or operations shown in the upper portions of Figs. 4 to 6 are carried out.

More specifically, in Figs. 4 to 6, the solid lines in the vertical direction represent the conditions of the handset unit 1 and the base unit 2. Although the solid lines in the vertical direction represents the time axis direction, the time axis directions are not presented linear for simplicity. The single solid lines represent the sleep mode and the double solid lines represent the mode that only the reception is permitted and the hatched periods thereof represent a period in which the transmission also is permitted.

The handset unit 1 alternately and intermittently receives and monitors the down third and seventh channels in accordance with the channel data CHDT stored in the RAM 142, while the base unit 2 repeatedly scans all up-channels.

An outgoing call from the handset unit 1 to the external line is performed as in the connection sequence shown in Fig. 4.

More specifically, when the handset unit 1 is set in the standby mode, if the talk key 132 is depressed, such depression of the talk key 132 is detected by the microcomputer 140, whereby the receiving circuit 120 performs the reception on the down third channel or the down seventh channel indicated by the channel data CHDT stored in the RAM 142. If one of the above-mentioned channels, for example, the third channel is vacant, the reception channel of the receiving circuit 120 is fixed to the down third channel and the continuous reception is permitted. Further, in the up third channel, the transmitting circuit 110 is permitted to perform the transmission through the up third channel so that the handset unit 1 is placed in the talk mode on the third channel.

Subsequently, the command signal CMND whose control code CTRL indicates the request of the outgoing call is repeatedly supplied from the microcomputer 140 to the transmitting circuit 110, and the command signal CMND is converted into the FM signal Su of the up third channel by the transmitting circuit 110. This signal Su is transmitted to the base unit 2 via an antenna 100.

Then, in the base unit 2, although the signal (radio wave) Su is received by an antenna 200, the receiving circuit 220 repeatedly scans all up channels so that, when the reception channel becomes the third channel, the receiving circuit 220 derives the detection signal SQLC. Then, the scanning of the receiving circuit 220 is stopped at the third channel and then the receiving circuit 220 demodulates the FM signal Su to provide the command signal CMND. This command signal CMND is supplied to the microcomputer 240 which determines whether or not the identifying code SYID involved in the command signal CMND coincides with the identifying code SYID stored in the ROM 241.

In that case, since the identifying codes SYID are coincident with each other and the control code CTRL involved in the command signal CMND indicates the request of the outgoing call, the transmitting circuit 210 is permitted by the microcomputer 240 to perform the transmission in the channel in which the FM signal Su is received, in that case, the down third channel. Accordingly, the base unit 2 also is placed in the talk mode through the third channel.

Then, the command signal CMND which answers the request of the outgoing call is supplied from the microcomputer 240 to the transmitting circuit 210 and, in this transmitting circuit 210, the command signal CMND is converted into the FM signal Sd of the down third channel, this signal Sd being transmitted to the handset unit 1 via the antenna 200.

When the FM signal Sd is transmitted from the base unit 2 to the handset unit 1 through the down third channel, this FM signal Sd is received by the antenna 100 and fed to the receiving circuit 120, whereby the command signal CMND is generated from the receiving circuit 120 and fed to the microcomputer 140.

Since the identifying code SYID involved in the command signal CMND is coincident with the identifying code SYID stored in the ROM 141 and the control code CTRL involved in the command signal CMND indicates the answer to the request of the outgoing call, the talk modes of the transmitting circuit 110 and the receiving circuit 120 in the third channel are decided.

Accordingly, a communication channel between the handset unit 1 and the base unit 2 are connected via the third channel.

Further, in the base unit 2, the switch circuit 262 is placed in the off hook mode, whereby the transmitting circuit 210 and the receiving circuit 220 are connected to the telephone line network 3 via the converting circuit 261 and the switch circuit 262.

Therefore, the handset unit 1 is connected to the telephone line network 3 via the base unit 2.

Then, if the user inputs a telephone number of the party to be called by using the dial key 131 of the handset unit 1, the command signal CMND whose control code CTRL indicates the transmission of the telephone number and the corresponding telephone number is generated, and this signal CMND is converted into the FM signal Su of the up channel and transmitted.

Accordingly, in the base unit 2, the receiving circuit 220 derives the command signal CMND, and the control code CTRL of this command signal CMND indicates the transmission of the telephone number and the corresponding telephone number so that the generating circuit 263 is controlled by the microcomputer 240 in accordance with the telephone number to thereby generate a dial tone signal corresponding to the telephone number supplied thereto from the handset unit 1. This dial tone signal is transmitted through the converting circuit 261 and the switch circuit 262 to the telephone line network 3.

When the called phone is answered, the audio signal Sr from the party being called is supplied to the transmission circuit 210 via a signal line formed of the telephone line network 3, the switch circuit 262 and the converting circuit 261, in that order. Therefore, this audio signal Sr is converted into the FM signal Sd of the down channel and this signal Sd is transmitted from the antenna 200.

Then, this signal Sd is received by the handset unit 1 and the receiving circuit 120 derives the audio signal Sr, this signal Sr being supplied to the telephone receiver 121.

In communication, the audio signal St from the telephone transmitter 111 is supplied to the transmitting circuit 110, in which it is converted into the FM signal of the up channel, this signal Su being transmitted from the antenna 100 to the base unit 2.

This signal Su is received by the base unit 2 and the signal St is generated from the receiving circuit 220. This signal St is supplied to the telephone line network 3 via the converting circuit 261 and the switch circuit 262, and is then transmitted to the telephone set of the other party.

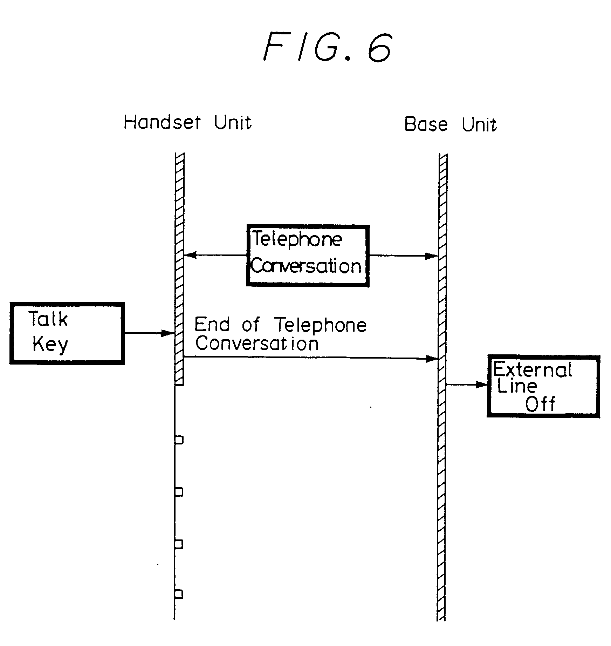

When the telephone communication is ended, as shown in Fig. 6, if the talk key 132 of the handset unit 1 is depressed, the command signal CMND whose control code CTRL indicates the termination of the telephone conversation is generated and this command signal CMND is transmitted to the base unit 2 on the FM signal Su of the up channel.

Then, the receiving circuit 220 of the base unit 2 derives that command signal CMND and the microcomputer 240 determines that the telephone communication is finished. As a result, the transmission of the transmitting circuit 210 is inhibited and the receiving circuit 220 is placed in the mode in which it repeatedly scans all up channels, that is, the standby mode. The switch circuit 262 also is placed in the on hook mode.

Also in the handset unit 1, after the command signal CMND whose control code CTRL indicates the end of the telephone conversation has been transmitted, the transmission of the transmitting circuit 110 is inhibited and the receiving circuit 120 is placed in the mode where it alternately and intermittently receives the down third and seventh channels once again, that is, the standby mode.

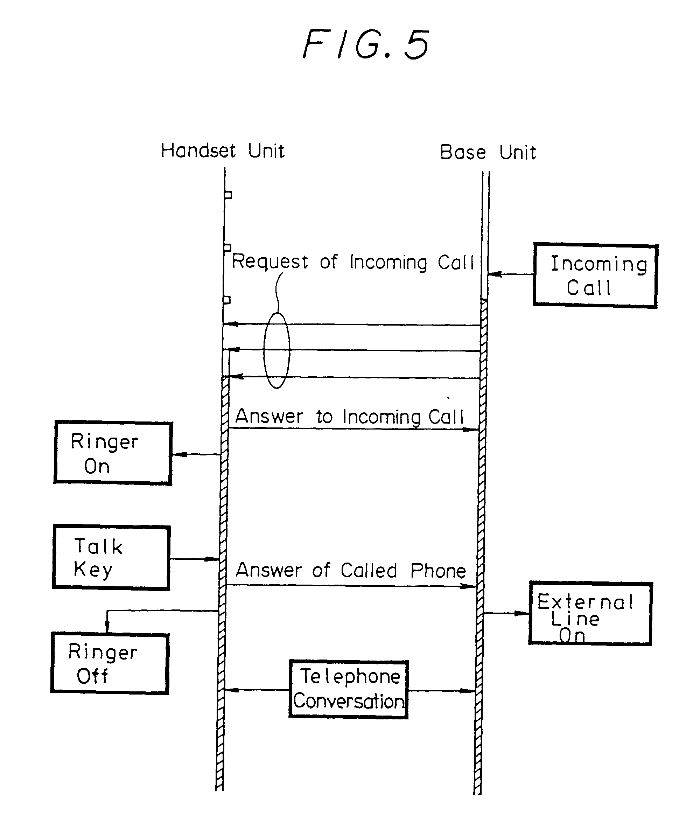

An incoming call to the handset unit 1 from the external line is received by the handset unit 1 according to a connection sequence shown, for example, in Fig. 5.

When an incoming call arrives through the telephone line network 3, the ring tone signal is detected by the detecting circuit 264 and the detection signal is supplied to the microcomputer 240 in the base unit 2. Thus, the receiving circuit 220 receives the up third channel or up seventh channel indicated by channel data CHDT stored in the RAM 242. If either of the channels, for example, the third channel is vacant, the reception channel of the receiving circuit 220 is fixed to the up third channel. Further, in the down third channel, the transmission of the transmitting circuit 210 is permitted so that the base unit 2 is set in the talk mode in the third channel.

Subsequently, the command signal CMND whose control code CTRL indicates the request of the incoming call is repeatedly supplied to the transmitting circuit 210 from the microcomputer 240, and the command signal CMND is converted into the FM signal Sd of the down third channel and is then transmitted to the handset unit 1.

In the handset unit 1, although the signal Sd is received by the antenna 100, the receiving circuit 120 alternately and intermittently scans repeatedly the down third and seventh channels in accordance with the channel data CHDT stored in the RAM 142 so that, when the reception channel becomes the third channel, the receiving circuit 120 derives the detection signal SQLC. Then, in the third channel, the scanning operation of the receiving circuit 120 is stopped and the receiving circuit 120 demodulates the FM signal Sd to provide the command signal CMND, to thereby determine whether or not the system identifying code SYID involved in this command signal CMND coincides with the system identifying code SYID stored in the ROM 141.

In that case, since the system identifying codes SYID are coincident with each other and the control code CTRL involved in the command signal CMND indicates the request of the incoming call, the transmission of the transmitting circuit 110 is permitted in the channel in which the FM signal Su is received, in that case, the up third channel. Therefore, the handset unit 1 also is set in the talk mode in the third channel.

Subsequently, the command signal CMND which answers the request of the incoming call is supplied to the transmitting circuit 110 from the microcomputer 140, and this command signal CMND is converted into the FM signal Su of the up third channel and is then transmitted to the base unit 2.

In the base unit 2, when the FM signal Su is transmitted thereto from the handset unit 1 via the up third channel, the command signal CMND is generated from the receiving circuit 220 and fed to the microcomputer 240.

Since the system identifying code SYID involved in the command signal CMND is coincident with the system identifying code SYID stored in the ROM 241 and the control code CTRL involved in the command signal CMND indicates the answer to the request of the incoming call, the talk modes of the transmitting circuit 210 and the receiving circuit 220 in the third channel are decided.

Accordingly, a communication channel between the handset unit 1 and the base unit 2 is established via the third channel.

Further, in the handset unit 1, the oscillation circuit 138 is controlled by the microcomputer 140 to generate a ringer signal, and this ringer signal is supplied to the speaker 139 so that the speaker 139 emanates a bell sound, announcing the arrival of the incoming call.

In the handset unit 1, if the talk key 132 thereof is depressed, an answer command signal CMND whose control code CTRL indicates the depression of the talk key 132 is generated. This command signal CMND is transmitted via the FM signal Su and the oscillation circuit 138 is turned OFF, whereby the ringer is turned OFF.

When the command signal CMND from the handset unit 1 is received by the base unit 2, the switch circuit 262 is placed in the off hook state so that a communication channel is opened between the handset unit 1 and the base unit 2, thus the telephone communication to the handset unit 1 of the called phone is effected from then on.

The user can make an outgoing call, receive an incoming call and end the telephone conversation by the dial key 231, the hook switch 232, the transmitter and receiver 211 and 221, the oscillation circuit 238 and the speaker 239 of the base unit 2, similarly to the standard telephone set. At that time, a communication channel is never opened between the base unit 2 and the handset unit 1.

Let it be assumed that the cordless telephone in which the base unit 2 is provided with the transmitter 211 and the receiver 221 is provided with a hold function. When the telephone conversation is performed by utilizing the handset unit 1, the handset unit 1 is set in the hold mode and after a predetermined period of time, the base unit 2 releases the hold mode, whereby the telephone communication is started again through the transmitter 211 and the receiver 221.

In order that the handset unit 1 and the base unit 2 can be freely placed in the hold mode and can be freely released from the hold mode, during the hold mode, the communication channel between the handset unit 1 and the base unit 2 must be kept open, whereby a hold releasing command signal CMND can be accessed between the handset unit 1 and the base unit 2.

Generally, during the telephone conversation, the user holds the handset unit 1 with his or her hand so that the antenna of the handset unit 1 stands upright. When the user enters the hold mode with the handset unit 1 and puts the handset unit 1 on the table or the like in the horizontal direction, the antenna of the handset unit 1 is also placed in the horizontal direction. Further, the propagation of radio waves is hindered depending on the material of the table or the like. As described above, when the handset unit 1 enters the hold mode, the situation of the handset unit 1 is changed so that the propagation condition of radio wave (FM signal Su) transmitted by the handset unit 1 and the propagation condition of radio wave (FM signal Sd) received by the handset unit 1 are rapidly deteriorated.

Accordingly, the base unit 2 fails to access the hold release command CMND and therefore the handset unit 1 continues the hold mode unitl the user switches the talk 132 of the handset unit 1 to the standby mode, consuming the battery 151 uselessly.

For examples of cordless telephone devices corresponding to the preamble of claim 1, reference may be made to the following documents : EP-A-0 265 944, EP-A-0 354 049 (which constitutes a state of the art under Article 54 (3) (4) EPC for DE & GB), and JP-A-61 239 732.

### OBJECTS AND SUMMARY OF THE INVENTION

Accordingly, it is an object of the present invention to provide an improved cordless telephone which can eliminate the aforenoted shortcomings and disadvantages encountered with the prior art.

More specifically, it is an object of the present invention to provide a cordless telephone in which the power consumption of a battery of a handset unit can be reduced considerably.

It is another object of the present invention to provide a cordless telephone in which a handset unit also is set to the hold mode when a telephone communication is held by a base unit so that the telephone communication held can be released by the handset unit, thereby starting the telephone communication again.

According to an aspect of the present invention, there is provided a cordless telephone substantially as defined in claim 1.

According to another aspect of the present invention, there is provided a method of controlling a hold mode in a cordless telephone comprising a master station connected to a telephone line network and a remote station, substantially as defined in claim 4.

According to another aspect of the present invention, a cordless telephone is provided, in which during telephone communication a communication channel is opened between a remote station and a master station by a radio wave and the master station is connected to a telephone line network thereby to perform a telephone communication between remote station and a third party. This cordless telephone is arranged such that when a hold mode operation is made on the master station, the master station is placed in the hold mode, the master station opens a communication channel between it and the remote station and transmits a hold mode changing control signal to the remote station; when receiving the hold mode changing control signal, the remote station is placed in the hold mode, the communication channel opened between the master station and the remote station is monitored during a predetermined period after the hold mode, and the remote station is moved to a standby mode after the predetermined time is passed in the hold mode.

These, and other objects, features and advantages of the present invention will become apparent from the following detailed description of an illustrative embodiment to be taken in conjunction with the accompanying drawings, in which like reference numerals are used to identify the same or similar parts in the several views.

### BRIEF DESCRIPTION OF THE DRAWINGS

Fig. 1 is a timing chart used to explain the way of how to suppress the power consumption of a battery of a handset unit;
Fig. 2 is a schematic block diagram showing an overall arrangement of a cordless telephone to which the present invention is applied;
Fig. 3 is a schematic diagram showing a signal format used in the present invention;
Fig. 4 is a schematic diagram showing a sequence of an outgoing call;
Fig. 5 is a schematic diagram showing a sequence of an incoming call;
Fig. 6 is a schematic diagram showing a sequence of a termination of a telephone conversation;
Fig. 7 (formed of Figs. 7A and 7B drawn on two sheets of drawings to permit the use of a suitably large scale) is a flowchart to which references will be made in explaining an operation of a handset unit of the cordless telephone according to the present invention;
Fig. 8 (formed of Figs. 8A and 8B drawn on two sheets of drawings to permit the use of a suitably large scale) is a flowchart to which references will be made in explaining an operation of a base unit of the cordless telephone according the present invention;
Figs. 9A and 9B are schematic diagrams of protocols used to explain the present invention, respectively;
Fig. 10 (formed of Figs. 10A and 10B drawn on two sheets of drawings to permit the use of a suitably large scale) is a flowchart to which references will be made in explaining the operation of the handset unit; and
Fig. 11 (formed of Figs. 11A and 11B drawn on two sheets of drawings to permit the use of a suitably large scale) is a flowchart to which references will be made in explaining the operation of the base unit.

### DETAILED DESCRIPTION OF THE PREFERRED EMBODIMENT

The present invention will hereinafter be described with reference to the drawings.

Let us explain first an operation in which the user enters the hold mode when the user makes a telephone conversation by the handset unit 1.

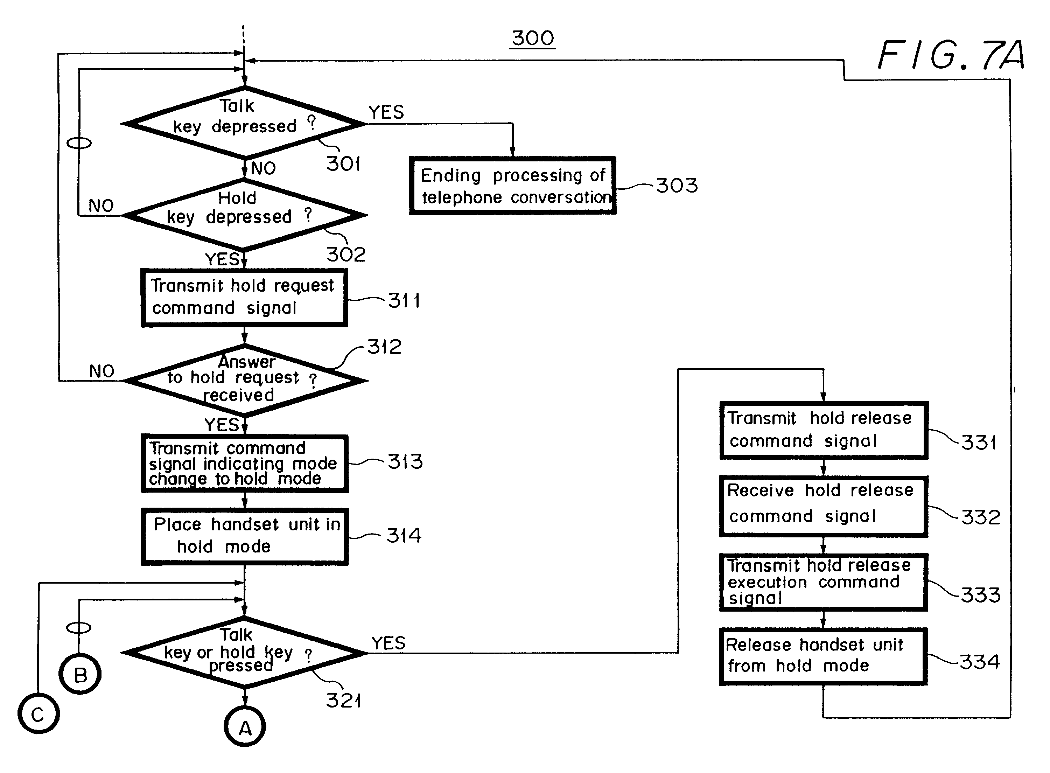

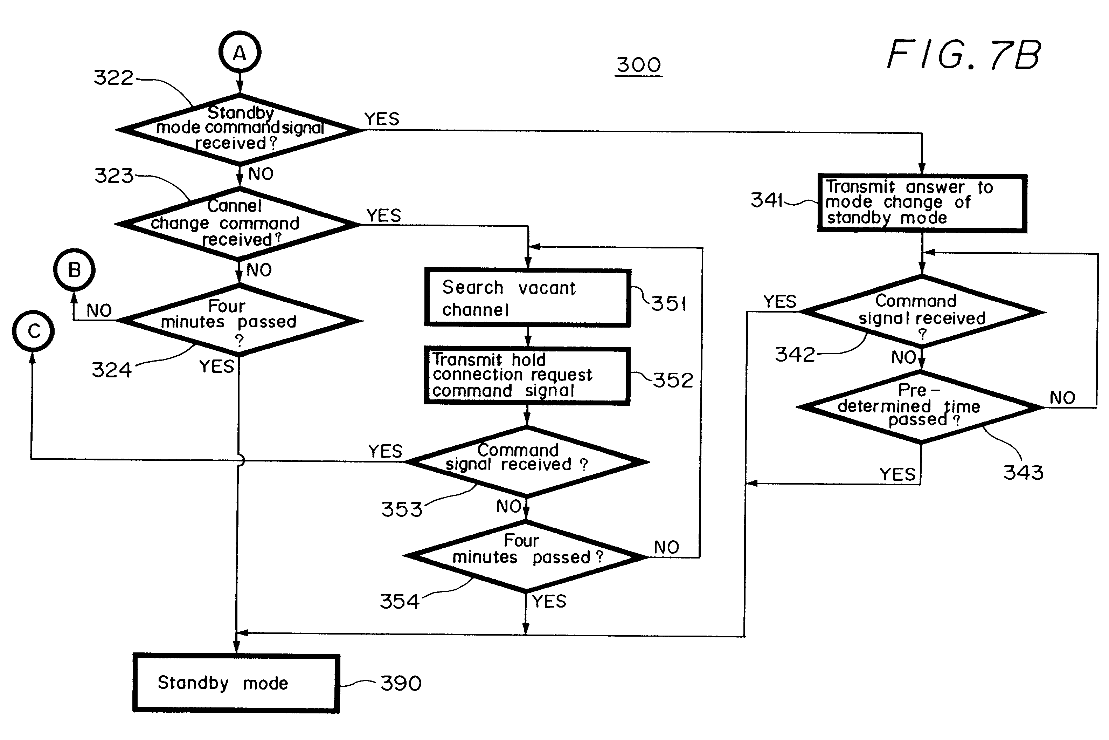

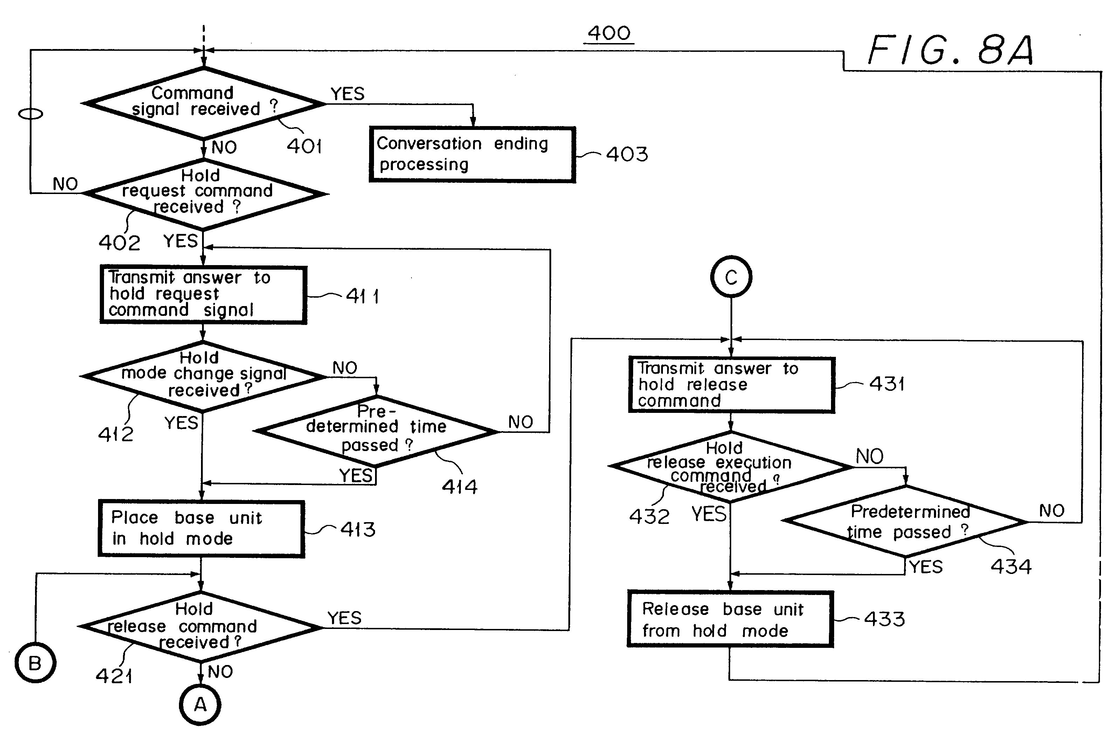

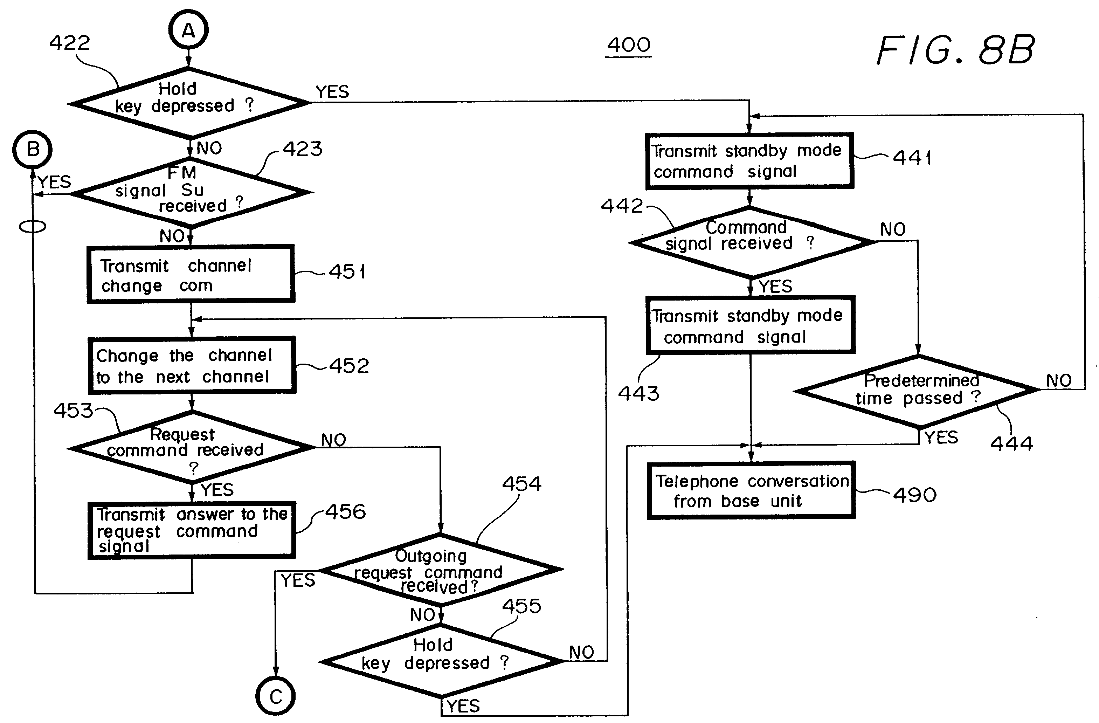

A routine 300 shown in the flowchart of, for example, Fig. 7 is prepared in the microcomputer 140 of the handset unit 1 while a routine 400 in the flowchart of, for example, Fig. 8 is prepared in the microcomputer 240 of the base unit 2.

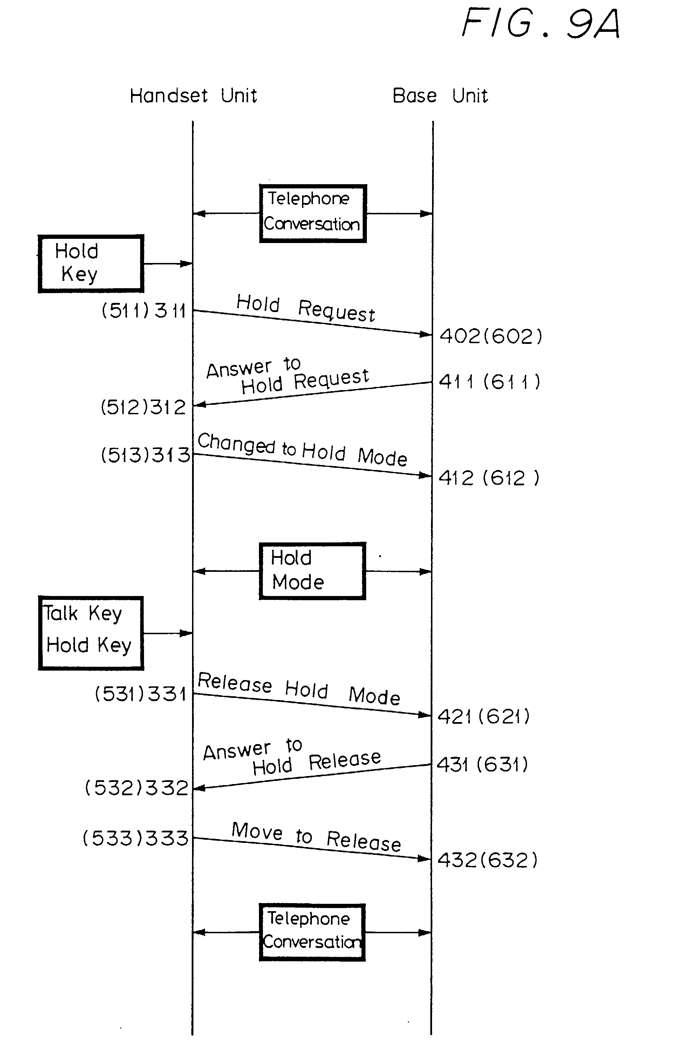

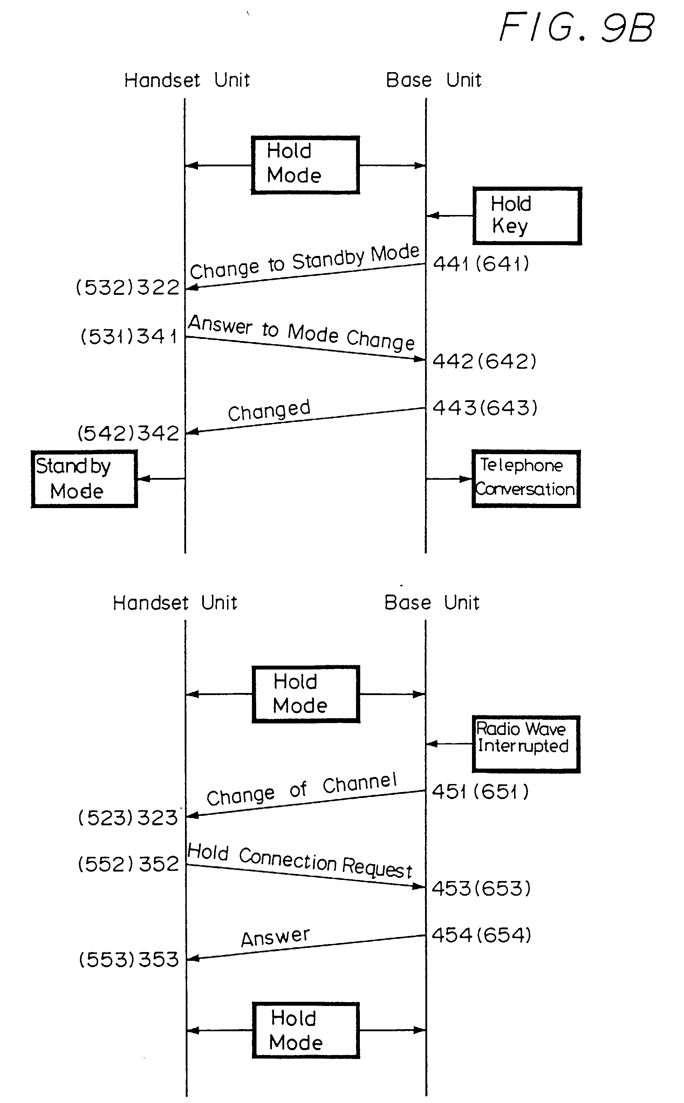

Figs. 9A and 9B show protocols of processing associated with the hold mode, and reference numerals on two sides of the protocols of Figs. 9A and 9B identify reference numerals of respective steps in the routines 300 and 400.

When the telephone communication is made by using the handset unit 1, steps 301 and 302 of the routine 300 are repeated in the handset unit 1. More specifically, it is checked at step 301 whether or not the talk key 132 is depressed. If the talk key 132 is not depressed as represented by a NO at step 301, the processing proceeds from step 301 to the next decision step 302. In step 302, it is determined whether or not the hold key 133 is depressed. If the hold key 133 is not depressed as represented by a NO at step 302, the processing returns from step 302 to step 301. Accordingly, during the telephone conversation, the conditions of the talk key 132 and the hold key 133 are monitored at steps 301 and 302.

When the talk key 132 is depressed during the telephone conversation, such depression of the talk key 132 is detected at step 301, the processing proceeds from step 301 to step 303. In step 303, the ending processing of the telephone conversation, which was already explained with reference to Fig. 6, is executed.

Further, when the telephone conversation is carried out by the use of the handset unit 1, steps 401 and 402 of the routine 400 shown in Fig. 8 are repeatedly executed in the base unit 2.

Referring to Fig. 8, it is determined in decision step 401 whether or not the command signal CMND of the termination of telephone conversation is received. If the command signal CMND is not received as represented by a NO at step 401, the processing proceeds from step 401 to the next decision step 402. It is determined in decision step 402 whether or not the hold request command signal CMND is received. If the hold request command signal CMND is not received as represented by a NO at step 402, the processing returns from step 402 to step 401.

Accordingly, during the telephone conversation, the reception of the conversation terminating and hold request command signals CMND is always checked at steps 401 and 402.

If the conversation terminating command signal CMND is received during the telephone communication, such reception is detected at step 401 and the processing proceeds from step 401 to step 403. In step 403, the conversation terminating processing, which was already explained with reference to Fig. 6, is executed.

If the hold key 133 is depressed during the telephone conversation, this depression of the hold key 133 is detected at step 302, and the processing proceeds from step 302 to step 311. In step 311, a command signal CMND whose control code CTRL indicates the hold request is generated and this command signal CMND is transmitted to the base unit 2. Then, the processing proceeds to the next decision step 312.

In step 402, the command signal CMND generated and transmitted in step 311 is detected, and the processing proceeds from step 402 to step 411. In step 411, a command signal CMND whose control code CTRL indicates the answer to the hold request is generated and this command signal CMND is transmitted to the handset unit 1. Then, the processing proceeds to the next decision step 412.

It is determined in step 312 whether or not the command signal CMND indicative of the answer to the hold request in step 411 is received. If the command signal CMND is not received as represented by a NO at step 312, then the processing returns from step 312 to step 301 whereat the handset unit 1 is again placed in the communication mode.

On the other hand, if the command signal CMND in step 411 is received as represented by a YES at step 312, the processing proceeds from step 312 to step 313. In step 313, a command signal CMND whose control code CTRL indicates that the movement to the hold mode is generated and this command signal CMND is transmitted to the base unit 2. In the next step 314, the transmitting circuit 110 and the receiving circuit 120 are muted by the control signals TCTL and RCTL and the LED 161 is flashed, thereby the handset unit 1 being placed in the hold mode.

When the handset unit 1 is placed in the hold mode, the processing proceeds to the next decision step 321, and step 321 and steps 322 to 324 are repeated from then on.

More specifically, it is determined in decision step 321 whether or not the talk key 132 or the hold key 133 is depressed. If neither of them is depressed as represented by a NO at step 321, the processing proceeds from step 321 to the next decision step 322. It is determined in step 322 whether or not the command signal CMND whose control code CTRL indicates the movement to the standby mode is received. If such command signal CMND is not received as represented by a NO at step 322, then the processing proceeds from step 322 to the next decision step 323. In step 323, it is determined whether or not the command signal CMND whose control code CTRL indicates the change of channel is received. If the command signal CMND is not received as represented by a NO at step 323, then the processing proceeds from step 323 to the next decision step 324. It is determined in step 324 whether or not a predetermined time, for example, four minutes are passed since the handset unit 1 has been placed in the hold mode by executing the step 314. If not, the processing returns from step 324 to step 321.

Accordingly, steps 321 to 324 are repeated until four minutes are passed after the handset unit 1 entered the hold mode, and the conditions of the talk key 132 and the hold key 133 are monitored (step 321), the command signal CMND for the movement to the standby mode is monitored (step 322) and the command for changing the channel is monitored (step 323).

In the base unit 2, it is determined in step 412 whether or not the command signal CMND for the movement to the hold mode in step 313 is received. If the command signal CMND is received as represented by a YES at step 412, then the processing proceeds from step 412 to step 413. In step 413, the transmitting circuit 210 and the receiving circuit 220 are muted by the control signals TCTL and RCTL so that the base unit 2 also is set in the hold mode.

When the base unit 2 is placed in the hold mode, then the processing proceeds to the next decision step 421, and steps 421, 422 and 423 are repeated from then on.

More specifically, it is determined in step 421 whether or not the command signal CMND whose control code CTRL indicates the releasing of the hold mode is received. If the above-mentioned command signal CMND is not received as represented by a NO at step 421, then the processing proceeds from step 421 to the next decision step 422. It is determined at step 422 whether or not the hold key 233 is depressed. If the hold key 233 is not depressed as represented by a NO at step 422, then the processing proceeds from step 422 to step 423. It is determined in step 423 by observing the detection signal SQLC whether or not the FM signal Su from the handset unit 1 is received. If the FM signal Su is received as represented by a YES, then the processing returns from step 423 to step 421.

Accordingly, when the base unit 2 is set in the hold mode, steps 421 to 423 are repeated, where the hold release command is monitored (at step 421), the condition of the hold key 233 is monitored (at step 422) and the presence or absence of the FM signal Su is monitored (in step 423).

If the command signal CMND for the movement to the hold mode is not received as represented by a NO at step 412, then the processing proceeds from step 412 to step 414. In step 411, it is determined whether or not a predetermined time, for example, several seconds are passed since step 411 has been executed first. If the predetermined time is not passed as represented by a NO at step 414, the processing returns from step 414 to step 411.

Accordingly, the command signal CMND of the answer to the hold mode is transmitted until the command signal CMND for the movement to the hold mode in step 313 is received or until the predetermined time is passed in step 414.

If it is determined in step 414 that the predetermined time is passed, then the processing proceeds from step 414 to step 413, whereat the base unit 2 is placed in the hold mode. In that case, since the hold key 133 is depressed in the handset unit 1 and the base unit 2 received the hold request command signal CMND, no trouble occurs.

In the above-mentioned hold mode, if the talk key 132 or the hold key 133 of the handset unit 1 is depressed, this depression of the talk key 132 or the hold key 133 is detected at step 321, and the processing proceeds from step 321 to step 331. In step 331, a command signal CMND whose control code CTRL indicates the release of the hold mode is generated. This command signal CMND is transmitted to the base unit 2 and then, the processing proceeds to step 332.

Then, the hold release command CMND is detected at step 421, and the processing proceeds from step 421 to step 431. In step 431, a command signal CMND whose control code CTRL indicates that the answer to the hold release command is generated, and this command signal CMND is transmitted to the handset unit 1. Then, the processing proceeds from step 431 to the next decision step 432.

In the handset unit 1, the hold release command CMND in step 431 is received at step 332 and a command signal CMND whose control code CTRL indicates the execution of the releasing of the hold mode is generated at the next step 333. This command signal CMND is transmitted to the base unit 2, and in the next step 334, the transmitting circuit 110 and the receiving circuit 120 are released from the muted conditions by the control signals TCTL and RCTL. Then, the LED 161 is turned OFF and the handset unit 1 is released from the hold mode. Thereafter, the processing returns to step 301 and the handset unit 1 is set in the communication mode.

In the base unit 2, it is determined in step 432 whether or not the command signal CMND, whose control code CTRL indicates the execution of the releasing of the hold mode, is received. If that command signal CMND is received as represented by a YES at step 432, then the processing proceeds from step 432 to step 433. In step 433, the transmitting circuit 210 and the receiving circuit 220 are released from the muted conditions by the control signals TCTL and RCTL, thereby the base unit 2 being released from the hold mode.

Thereafter, the processing returns to step 401 and the base unit 2 is therefore set in the communication mode, too. Accordingly, the telephone communication is again made possible by the handset unit 1 via the base unit 2.

If the command signal CMND indicative of the execution of the releasing of the hold mode in step 333 is not received as represented by a NO at step 432, then the processing proceeds from step 432 to the next decision step 434. It is determined in step 434 whether or not a predetermined time, for example, several seconds are passed since step 431 has been executed first. If the predetermined time is not passed as represented by a NO, then the processing returns from step 434 to step 431.

Accordingly, the transmission of the command signal CMND of the answer to the releasing of the hold mode is repeated (in step 431) and the reception of the command signal CMND whose control code CTRL indicates the execution of the releasing of the hold mode is repeatedly executed (in step 432) until the predetermined time is passed.

If the predetermined time is passed as represented by a YES at step 434, then the processing proceeds from step 434 to step 433, whereat the base unit 2 is released from the hold mode. Then, the processing returns from step 433 to step 401 and the telephone conversation is started again.

In that case, although step 432 is neglected because the predetermined time is passed and the telephone conversation is started again, the hold mode releasing command is issued by depressing the talk key 132 or the hold key 133 in the handset unit 1 and the hold mode releasing command CMND is received at step 421 in the base unit 2 so that, when the predetermined time is passed, the processing may proceed from step 434 to step 433 without causing any trouble.

An operation in which the telephone conversation from the base unit 2 is started again will be explained below. In this operation, when the telephone conversation is effected by utilizing the handset unit 1, the handset unit 1 is placed in the hold mode as set forth above and the hold mode of the handset unit 1 is released by the base unit 2, whereby the telephone conversation is started again by the transmitter and receiver 211 and 221.

More specifically, in the hold mode, if the hold key 233 of the base unit 2 is depressed, such depression of the hold key 233 is detected in step 422, and the processing proceeds from step 422 to step 441. In step 441, a command signal CMND whose control code CTRL indicates the movement to the standby mode is generated, and this command signal CMND is transmitted to the handset unit 1. Then, the processing proceeds to the next decision step 442.

In the handset unit 1, this command signal CMND is detected at step 322, and the processing proceeds from step 322 to step 341 whereat a command signal CMND whose control code CTRL indicates the answer to the movement to the standby mode is generated and this command signal CMND is transmitted to the base unit 2. Then, the processing proceeds from step 341 to the next decision step 342.

It is determined in step 442 whether or not the command signal CMND whose control code CTRL indicates the movement to the standby mode in step 341 is received. If that command signal CMND is received as represented by a YES at step 442, then the processing proceeds from step 442 to step 443. In step 443, a command signal CMND whose control code CTRL indicates the movement to the standby mode is generated and this command signal CMND is transmitted to the handset unit 1. Thereafter, the processing proceeds from step 443 to step 490. In step 490, the transmission and the reception of the transmitting circuit 210 and the receiving circuit 220 are inhibited by the control signals TCTL and RCTL and the transmitter 211 and the receiver 221 are connected to the telephone line network 3 via the converting circuit 261 and the switch circuit 262. Therefore, the telephone conversation can be started again by means of the transmitter and receiver 211 and 221 from now on.

At that time, in the handset unit 1, it is determined in step 342 whether or not the command signal CMND whose control code CTRL indicates the movement to the standby mode is received. If such command signal CMND is received as represented by a YES at step 342, then the processing proceeds from step 342 to step 390. In step 390, the LED 161 is turned OFF, announcing that the handset unit 1 is released from the hold mode. Then, the handset unit 1 is set in the standby mode wherein two channels indicated by the channel data CHDT are alternately and intermittently received and monitored as earlier noted with reference to Fig. 9B. In the standby mode, when the handset unit 1 is connected to the base unit 2 in order to make an outgoing call, the handset unit 1 is set in such a mode that the outgoing call is made via any one vacant channel of the two channels indicated by the channel data CHDT. Then, the handset unit 1 is placed in the standby mode for intermittently receiving two channels from now on.

If the command signal CMND whose control code CTRL indicates the movement to the standby mode in step 341 is not received as represented by a NO at step 442, then the processing proceeds from step 442 to step 444. It is determined in step 444 whether or not a predetermined time, for example, several seconds are passed since step 441 has been executed first. If the predetermined time is not passed as represented by a NO at step 444, then the processing returns from step 444 to step 441. If on the other hand the predetermined time is passed as represented by a YES at step 444, then the processing proceeds from step 444 to step 490.

Accordingly, if the standby mode command signal CMND in step 341 is not received as represented by a NO at step 442, the transmission of the command signal CMND for the movement to the standby mode in step 441 and the reception of the answer to the command signal CMND in step 442 are repeatedly executed until the predetermined time is passed.

However, if the predetermined time is passed, the telephone communication by means of the transmitter 211 and the receiver 221 is made possible in step 490 regardless of the results of steps 441 and 442 because the transmitter 211 and the receiver 221 are placed on the on-hook state.

If the standby mode command signal CMND in step 443 is not received as represented by a NO at step 342, then the processing proceeds from step 342 to the next decision step 343. In step 343, it is determined whether or not a predetermined time, for example, several seconds are passed since the step 341 has been executed. If the predetermined time is not passed as represented by a NO at step 343, then the processing returns from step 343 to step 342. If on the other hand the predetermined time is passed as represented by a YES at step 343, then the processing proceeds from step 343 to step 390.

Accordingly, if the command signal CMND which answers the movement to the standby mode is transmitted in step 341, the handset unit 1 awaits the arrival of the standby mode command signal CMND of step 443 for several seconds. If the handset unit 1 fails to receive that command signal CMND after having waited for it several seconds, then the processing proceeds to step 390 whereat the handset unit 1 is released from the hold mode and is placed in the standby mode for intermittently receiving two channels.

In that case, since the handset unit 1 receives the standby mode command and answers this command in steps 332 and 341, the processing may proceed from step 343 to step 390 without causing any trouble.

As described above, even when the handset unit 1 is placed in the hold mode, the handset unit 1 can be released from the hold mode by the base unit 2 and the communication can be started again. At this time, the handset unit 1 is released from its hold mode and the handset unit 1 is set in the standby mode.

The condition that the FM signal Su of up channel is interrupted will be explained hereinafter. It is frequently observed that when the user places the handset unit 1 on the table or the like, the condition of the radio wave (FM signal Su) received by the base unit 2 is suddenly changed and cannot be received any more.

More specifically, if the FM signal Su is not received by the base unit 2 any more, then the detection signal SQLC thereof is changed and this change of the detection signal SQLC is detected in step 423. Then, the processing proceeds from step 423 to step 451.

In step 451, a command signal CMND whose control code CTRL indicates the change of the channel is generated and this command signal CMND is transmitted to the handset unit 1. In the next step 452, the channel is changed to the next channel.

On the other hand, in the handset unit 1, the channel changing command signal CMND in step 451 is detected at step 323, and then the processing proceeds from step 323 to step 351. In step 351, one of the vacant channels is searched and then selected and in the next step 352, a command signal CMND whose control code CTRL indicates the connection request for hold mode is generated and this command signal CMND is transmitted through the vacant channel selected in step 351. Thereafter, the processing proceeds to step 353.

Further, steps 452 to 455 are repeated in the base unit 2. More specifically, it is determined in step 453 whether or not the command signal CMND whose control code CTRL indicates the connection request for hold mode is received. If the command signal CMND is not received as represented by a NO at step 453, then the processing proceeds from step 453 to the next decision step 454. In decision step 454, it is determined whether or not the command signal CMND whose control code CTRL indicates the request of an outgoing call from the handset unit 1 is received. If the command signal is not received as represented by a NO at step 454, then the processing proceeds from step 454 to the next decision step 455. It is determined in decision step 455 whether or not the hold key 233 is depressed. If the hold key 233 is not depressed as represented by a NO at step 455, then the processing returns from step 455 to step 452.

If the hold connection request command CMND of step 352 is received, this reception is detected at step 453, and the processing proceeds from step 453 to step 456. In step 456, a command signal CMND whose control code CTRL indicates the answer to the hold connection request is generated, and this command signal CMND is transmitted to the handset unit 1. Then, the processing returns from step 456 to step 421.

If the command signal CMND of the outgoing call request from the handset unit 1 is received, this reception is detected at step 454 and the processing proceeds from step 454 to step 431. If the hold key 233 is depressed, this depression of the hold key 233 is detected at step 455 and the processing proceeds from step 455 to step 490.

Accordingly, when the base unit 2 cannot receive the FM signal Su from the handset unit 1 any more, the base unit 2 transmits the command of the change of channel to the handset unit 1 (in step 451) and then, the base unit 2 awaits the hold connection request in the vacant channel (in step 453). If the base unit 2 receives the hold connection request, the base unit 2 answers such hold connection request (in step 456) and is placed again in the hold mode.

Further, when the base unit 2 awaits the hold connection request in the vacant channel (in step 453), the base unit 2 checks the request of the outgoing call from the handset unit 1 (in step 454) and also checks the off-hook state of the transmitter 211 and the transmitter 221 (in step 455).

In the handset unit 1, it is determined in step 353 whether or not the command signal CMND whose control code CTRL indicates the answer to the hold connection request in step 454 is received. If the command signal CMND is received as represented by a YES at step 353, then the processing returns from steps 353 to step 321.

If the command signal CMND whose control code CTRL indicates the answer to the hold connection request in step 454 is not received as represented by a NO at step 353, then the processing proceeds from step 353 to the next decision step 354. In decision step 354, it is determined whether or not a predetermined time, for example, four minutes are passed since the step 314 has been executed and the handset unit 1 is placed in the hold mode. If the predetermined time is not passed as represented by a NO at step 353, then the processing returns from step 354 to step 351.

Accordingly, when the handset unit 1 receives the command signal CMND indicative of the change of the channel from the base unit 2, if the duration of the hold mode falls within four minutes from the hold mode, the handset unit 1 searches the vacant channel (in step 351), requests the connection for hold mode (in step 352), receives the answer(in step 353) and is placed again in the hold mode through step 321.

On the other hand, if four minutes are passed after the handset unit 1 entered the hold mode, then the processing proceeds from step 354 to step 390. In step 390, the handset unit 1 is released from the hold mode and is placed in the standby mode (the LED 161 is turned OFF).

Therefore, although the change of channel is instructed because the base unit 2 cannot receive the FM signal Su from the handset unit 1, if the channel is not connected after four minutes are passed, the handset unit 1 is set in the standby mode.

In the hold mode, the steps 321 to 324 are repeated in the handset unit 1. If four minutes are passed after the handset unit 1 is placed in the hold mode, this elapse of the predetermined time, e.g., four minutes is detected in step 324 and the processing proceeds from step 324 to step 390.

Consequently, if the hold mode is continued for four minutes, the handset unit 1 is set in the standby mode (the LED 161 is turned OFF) and the consumption of the battery 151 can be saved.

At that time, since the base unit 2 cannot receive the FM signal Su from the handset unit 1, the processing proceeds to the loop of steps 452 to 454 from step 423 through step 451.

Accordingly, after the predetermined time is passed since the handset unit 1 has been placed in the hold mode, by making an outgoing call by depressing the talk key 132 of the handset unit 1, step 431 is executed and the handset unit 1 is released from the hold mode. Alternatively, by depressing the hold key 233 of the base unit 2, step 490 is executed to release the base unit 2 from the hold mode.

According to the present invention, the processings in the hold mode are executed as described above. In this case, particularly, according to the present invention, after the handset unit 1 is placed in the standby mode, even if the condition of the FM signal Su transmitted by the handset unit 1 or the condition of the FM signal Sd received is suddenly changed so that the hold release command signal CMND cannot be accessed by the base unit 2, the handset unit 1 is released from the hold mode by step 324 after 4 minutes since the handset unit 1 has entered into the hold mode, and the handset unit 1 is changed to the standby mode in step 390, thus preventing the battery 151 from being consumed uselessly.

An operation in which the base unit 2 is set in the hold mode while the telephone communication is made by the base unit 2 will be explained next.

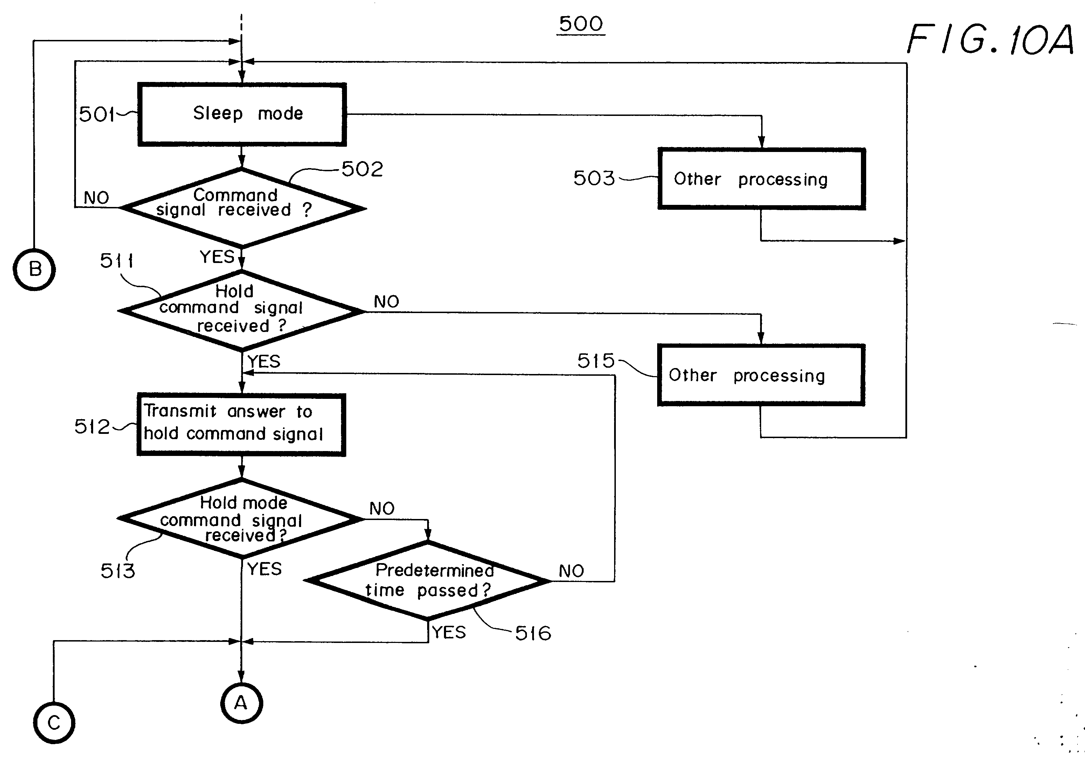

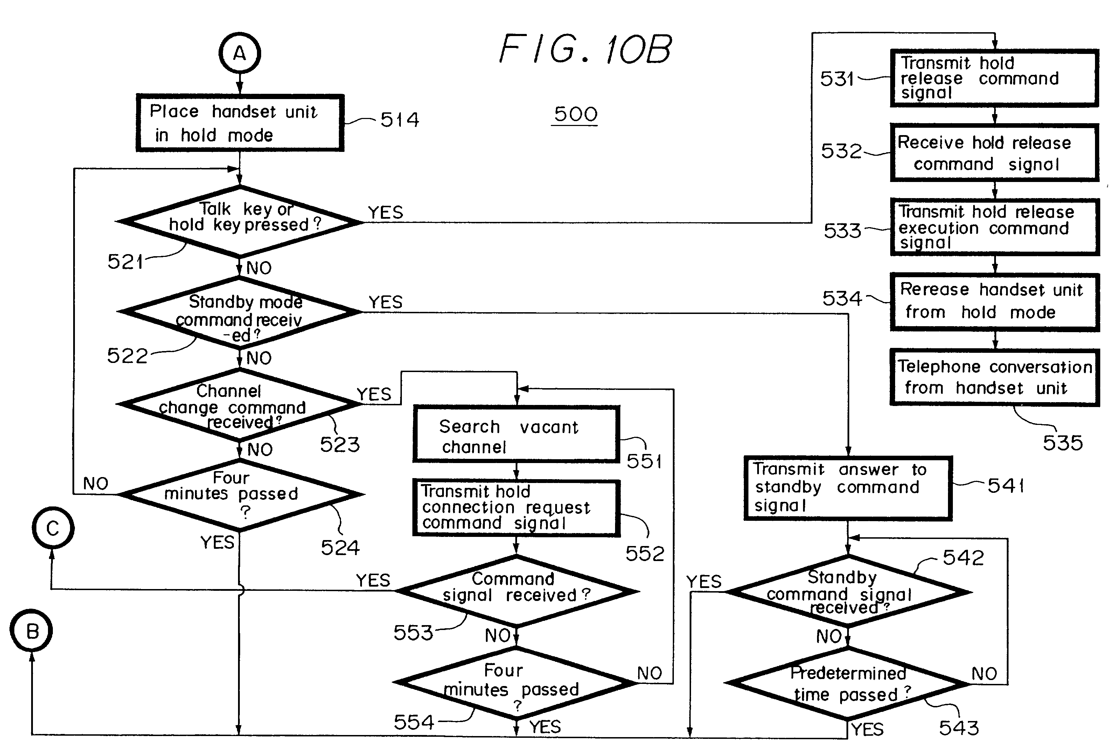

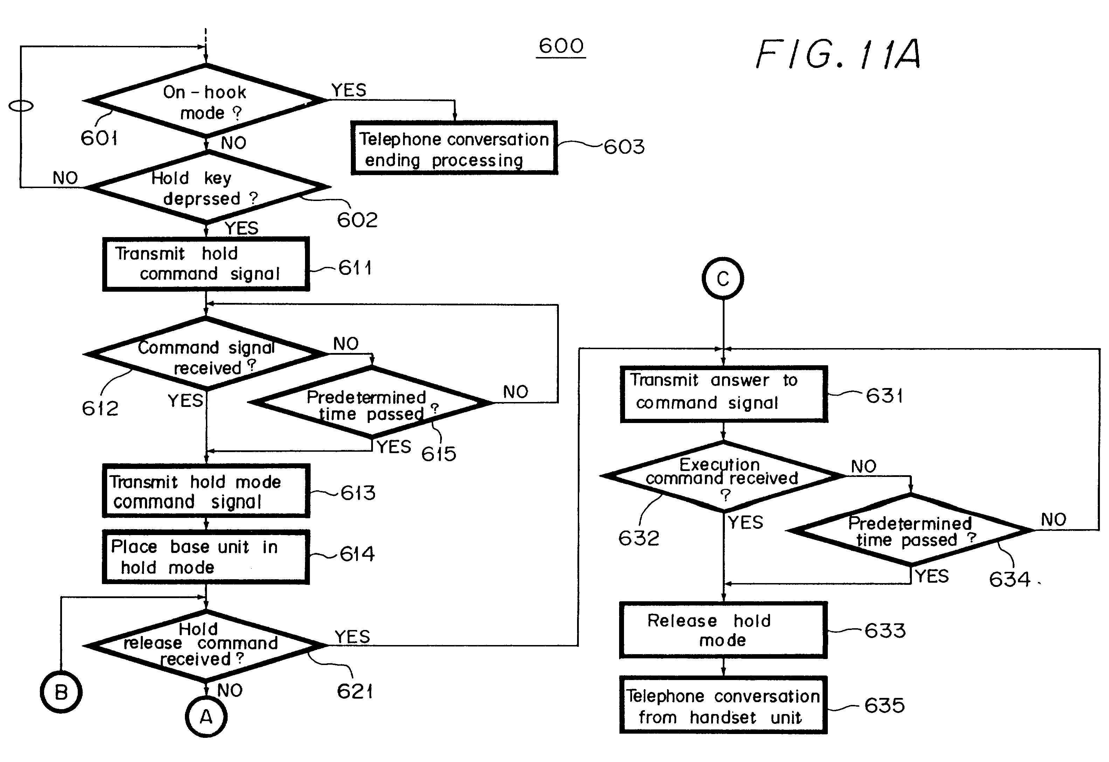

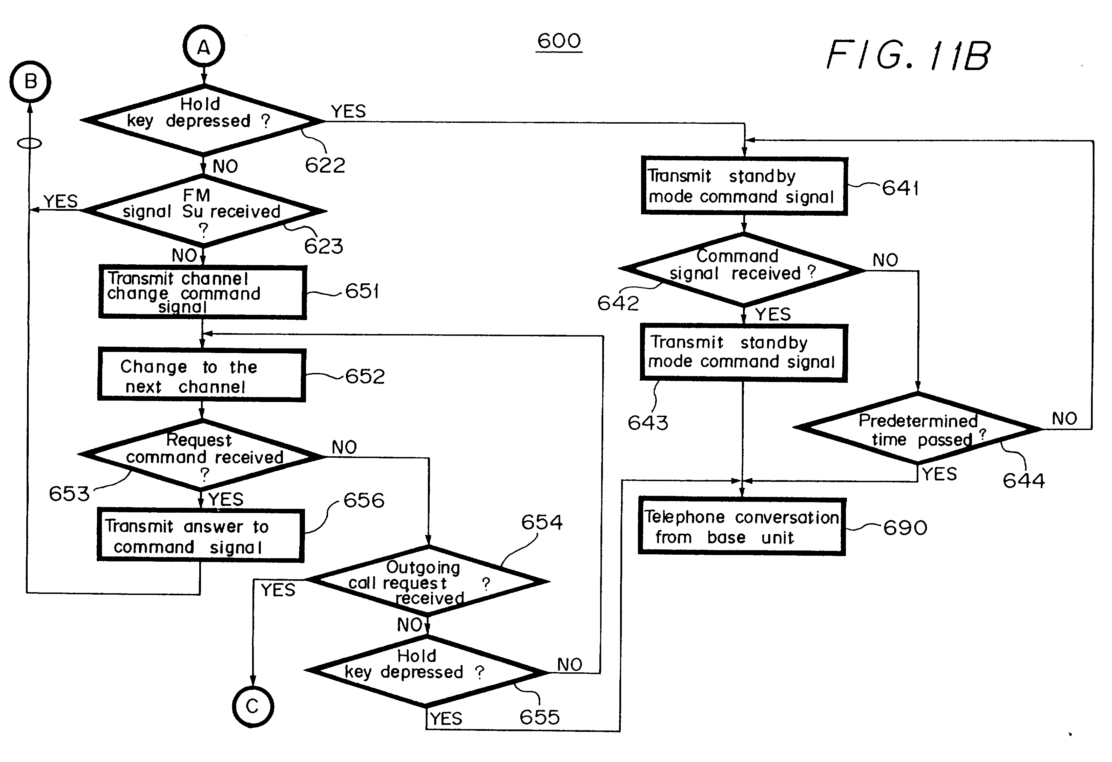

The microcomputer 140 of the handset unit 1 is provided with a routine 500 of a flowchart shown in Fig. 10 and the microcomputer 240 of the base unit 2 is provided with a routine 600 of a flowchart shown in Fig. 11.

Incidentally, Figs. 9A and 9B show protocols of data processing associated with the hold mode, and reference numerals in parentheses at two sides designate reference numerals of respective steps of the routines 500 and 600.

When the telephone conversation is made by using the base unit 2, the handset unit 1 is in the standby mode and steps 501 and 502 in the routine 500 are repeated.

More specifically, as shown in Fig. 10, in step 501, the handset unit 1 is set in the sleep mode during, for e.g., 3.5 seconds and then it is determined at step 502 whether or not the FM signal Sd from the base unit 2 is received through the third channel or the seventh channel. If the FM signal Sd cannot be received as represented by a NO at step 501, then the processing returns from step 502 to step 501.

In this fashion, the handset unit 1 is in the standby mode at steps 501 and 502 as earlier noted with reference to Fig. 1.

If the handset unit 1 is requested to perform some processing, for example, if the talk key 132 is depressed, the processing of the microcomputer 140 proceeds from step 501 to step 503, and in step 503, the requested processing is executed and then the processing of the microcomputer 140 is returned from step 503 to step 501.

Further, when the telephone communication is made by the use of the base unit 2, steps 601 and 602 of the routine 600 are repeated in the base unit 2.

More specifically, as shown in Fig. 11, it is determined in step 601 by checking the output of the switch 232 whether or not the transmitter 211 and the receiver 221 are set in the on-hook state. If the transmitter 211 and the receiver 221 are not set in the on-hook state as represented by a NO at step 601, then the processing proceeds from step 601 to the next decision step 602. It is determined in step 602 whether or not the hold key 233 is depressed. If the hold key 233 is not depressed as represented by a NO at step 602, then the processing returns from step 602 to step 601.

Accordingly, during the telephone communication, the on-hook state of the transmitter 211 and the receiver 221 and the depression of the hold key 233 are always checked at steps 601 and 602.

After the telephone communication, if the transmitter 211 and the receiver 221 are set in the on-hook state, such on-hook state is detected at step 601, and the processing proceeds from step 601 to step 603 whereat the conversation ending processing is executed.

If the hold key 233 is depressed during the telephone communication from the base unit 2, this depression is detected at step 602, and the processing proceeds from step 602 to step 611. In step 611, a command signal CMND whose control code CTRL indicates the request of the hold mode is generated, and this command signal CMND is transmitted to the handset unit 1. Then, the processing proceeds to the next decision step 612.

Then, the FM signal Sd transmitted through the command signal CMND in step 611 is detected at step 502, and the processing proceeds from step 503 to the next decision step 511. It is determined in decision step 511 whether or not the command signal CMND transmitted is identical to the command signal CMND of the hold mode. If it is the command signal CMND of the hold mode as represented by a YES at step 511, then the processing proceeds from step 511 to step 512. In step 512, a command signal CMND whose control code CTRL indicates the answer to the hold request is generated and this command signal CMND is transmitted to the base unit 2. Then, the processing proceeds from step 512 to the next decision step 513.

If the command signal CMND of the answer to the hold request transmitted in step 512 is received as represented by a YES at step 612, then the processing proceeds from step 612 to step 613. In step 613, a command signal CMND whose control code CTRL indicates the mode change to the hold mode is generated and this command signal CMND is transmitted to the handset unit 1. In the next step 614, the transmitting circuit 210 and the receiving circuit 220 are muted by the control signals TCTL and RCTL so that the base unit 2 is set in the hold mode.

If the base unit 2 is placed in the hold mode at step 614, then the processing proceeds to the next decision step 621, and steps 621, 622 and 623 are repeated from now on.

Incidentally, these steps 621, 622 and 623 are used to execute substantially the same processings as those in steps 421, 422 and 423 of Fig. 8 and therefore need not be described in detail.

If the command signal CMND whose control code CTRL indicates the answer to the hold request is not received as represented by a NO at step 612, then the processing proceeds from step 612 to decision step 615. It is determined in decision step 615 whether or not a predetermined time, for example, several seconds are passed since step 611 has been executed. If the predetermined time is not passed as represented by a NO at step 615, then the processing returns from step 615 to step 612.

Accordingly, steps 612 and 615 are repeated until the command signal CMND whose control code CTRL indicates the answer to the hold request in step 612 is received or until the predetermined time is passed at step 615.

If the predetermined time is over as represented by a YES at step 615, then the processing proceeds from step 615 to step 613 whereat the base unit 2 is set in the hold mode. In that case, no trouble occurs because the hold key 233 is depressed in the base unit 2 and the handset unit 1 receives the command signal CMND whose control code CTRL indicates the request of the hold mode.

On the other hand, in the handset unit 1, it is determined in decision step 513 whether or not the command signal CMND whose control code CTRL indicates the mode change to the hold mode in step 613 is received. If the command signal CMND is received as represented by a YES at step 513, then the processing proceed from step 513 to step 514. In step 514, the transmitting circuit 110 and the receiving circuit 120 are muted by the control signals TCTL and RCTL and the LED 161 is lit with the result that the handset unit 1 also is set in the hold mode.

If the handset unit 1 is placed in the hold mode, then the processing proceeds to the next decision step 521, and steps 521, 522, 523 and 524 are repeated. Incidentally, the processings of these steps 521, 522, 523 and 524 are substantially the same as those of steps 321, 322, 323 and 324 of Fig. 7 and therefore need not be described in detail.

If the command signal CMND is other than the command signal CMND whose control code CTRL indicates the request of the hold mode as represented by a NO at step 511, then the processing proceeds from step 511 to step 515, and in step 515, the processing associated with the transmitted command signal CMND is performed. Then, the processing returns to step 501.

Further, if the command signal CMND whose control code CTRL indicates the mode change to the hold mode is not received as represented by a NO at step 513, then the processing proceeds from step 513 to decision step 516. In decision step 516, it is determined whether or not a predetermined time, for example, several seconds are passed since step 511 has been executed. If the predetermined time is not passed as represented by a NO at step 516, then the processing returns from step 516 to step 512.

Accordingly, the reception of the command signal CMND whose control code CTRL indicates the answer to the hold request is repeated until the hold mode change command signal CMND of step 613 is received or until the predetermined time is passed at step 516.

If the predetermined time is passed as represented by a YES at step 516, then the processing proceeds from step 516 to step 514 whereat the handset unit 1 is placed in the hold mode. In that case, no trouble occurs because the hold key 233 is depressed in the base unit 2 and the command signal CMND whose control code CTRL indicates the request of the hold mode is already received by the handset unit 1.

An operation in which the hold mode is released by the handset unit 1 will be explained below. This is the case such where, when the telephone conversation is made by utilizing the base unit 2, the base unit 2 is placed in the above-mentioned hold mode and is released from the hold mode by the handset unit 1, thereby the telephone communication is started again by the transmitter 110 and the receiver 120.

More specifically, as shown in Fig. 10, during the above-mentioned hold mode, if the talk key 132 or the hold key 133 of the handset unit 1 is depressed, then the depression of such talk key 132 or the hold key 133 is detected at decision step 521, and the processing proceeds from step 521 to step 531. In step 531, a command signal CMND whose control code CTRL indicates the releasing of the hold mode is generated, and this command signal CMND is transmitted to the base unit 2. Thereafter, the processing proceeds to steps 532, 533, 534 and 535. These steps 521, 531, 532, 533, 534 and the steps 621, 631, 633, 634 of the base unit 2 corresponding thereto are used to execute substantially the same processings as those of the steps 321, 331, 332, 333, 334 of Fig. 7 and the steps 421, 431, 432, 433, 434 of Fig. 8, and therefore need not be described in detail. Incidentally, in the handset unit 1, the LED 161 is turned OFF at step 534, and the telephone conversation from the handset unit 1 becomes possible at step 535. After step 623, the base unit 2 can receive an incoming call from the handset unit 1 (in step 635).

An operation in which the telephone communication is again made possible from the base unit 2 will be explained hereinafter. This is the case where, during the telephone conversation is made by utilizing the base unit 2, the base unit 2 is placed in the above-mentioned hold mode and the base unit 2 is released from the hold mode, thereby the telephone conversation being started again by the transmitter 210 and the receiver 220.

More specifically, during the hold mode, if the hold key 233 of the base unit 2 is depressed, the depression of the hold key 233 is detected at step 622, and the processing proceeds from step 622 to step 641. In step 641, a command signal CMND whose control code CTRL indicates the mode change to the standby mode is generated, and this command signal CMND is transmitted to the handset unit 1. Then, the processing proceeds to the next decision step 642.

These steps 622, 641 and the following steps 643, 644, 690 and the corresponding steps 522, 541, 542, 543 of the handset unit 1 are used to execute substantially the same processings as those of the steps 422, 441, 442, 443, 444, 490 of Fig. 8 and the steps 322, 341, 342, 343 of Fig. 7 and therefore need not be described in detail. Incidentally, if the command signal CMND whose control code CTRL indicates the mode change is received or if the predetermined time is passed at step 543, then the LED 161 is turned OFF and the handset unit 1 is returned to the sleep mode.

An operation in which the FM signal Su of up channel is interrupted will be explained below. This is the case where, when the handset unit 1 is operated during the hold mode, the condition of the radio wave (FM signal Su) received by the base unit 2 so far is suddenly changed and cannot be received by the base unit 2.

More specifically, as shown in Fig. 11, if the FM signal Su cannot be received by the base unit 2, the detection signal SQLC is changed and this change of the detection signal SQLC is detected at step 623. Then, the processing proceeds from step 623 to step 651. The steps 623, 651 and the following steps 652, 653, 654, 655, 690 of the base unit 2 and the corresponding steps 523, 551, 552, 553, 554 of the handset unit 1 are used to execute substantially the same processings as those of the steps 423, 451, 462, 453, 454, 455, 490 of Fig. 8 and the steps 323, 351, 352, 353, 354 of Fig. 7 and therefore need not be described in detail. Incidentally, if the predetermined time, for example, four minutes are passed at step 554, then the LED 161 is turned OFF and the processing returns to step 501, whereby the handset unit 1 is set in the sleep mode.

When the handset unit 1 is placed in the hold mode, steps 521 to 524 are repeated in the handset unit 1. If four minutes are passed since the handset unit 1 has been set in the hold mode, this condition is detected at step 524, and the processing returns from step 524 to step 501.

Accordingly, if the hold mode is continued for four minutes, then the handset unit 1 is placed in the standby mode, thus the consumption of the battery 151 being saved.

At that time, since the FM signal Su from the handset unit 1 cannot be received by the base unit 2, then the processing proceeds to the loop of steps 652 to 654 from step 623 through step 651. These steps 623, 651, 652, 653, 654 and 690 are used to execute substantially the same processings as those of steps 423, 451, 452, 453, 454, 469, 490 of Fig. 8 and therefore need not be described in detail.

According to this invention, the processings in the hold mode are executed as described above. In that case, since the handset unit 1 also is set to the hold mode when the communication is held in the base unit 2, the hold mode of the base unit 2 can be released by the handset unit 1 and the telephone communication can be started again.

After the handset unit 1 is placed in the hold mode, even if the conditions of the FM signal Su transmitted from the handset unit 1 and the FM signal Sd received by the handset unit 1 are suddenly changed so that the base unit 2 cannot access the hold release command signal CMND, the handset unit 1 is released from the hold mode after four minutes since the handset unit 1 has entered the hold mode by the step 324. Then, the handset unit 1 is moved to the standby mode, thereby preventing the battery 151 from being consumed uselessly.

After the handset unit 1 is placed in the hold mode, even if the conditions of the FM signal Su transmitted from the handset unit 1 and the FM signal Sd received by the handset unit 1 are suddenly changed so that the base unit 2 cannot access the hold release command signal CMND, the handset unit 1 is released from the hold mode after four minutes since the handset unit 1 has entered the hold mode by the steps 324 and 524. Then, the handset unit 1 is moved to the standby mode, thereby preventing the battery 151 from being consumed uselessly.

Furthermore, since the handset unit 1 also is set to the hold mode when the telephone conversation is held by the base unit 2, the base unit 2 can be released from the hold mode by the handset unit 1 and therefore the telephone conversation can be started again.

Having described a preferred embodiment of the invention with reference to the accompanying drawings, it is to be understood that the invention is not limited to that precise embodiment and that various changes and modifications thereof could be effected by one skilled in the art without departing from the scope of the invention as defined in the appended claims only.

## Claims

1. A cordless telephone comprising a master station (2) connected to a telephone line network (3) and a remote station (1), wherein, during a telephone communication, a radio communication channel is opened between said master and remote stations to establish a telephone communication between said remote station and a third party, said cordless telephone having a hold mode control means (133, 140, 240) wherein during a hold mode, said communication channel between said master station and said remote station is monitored during a predetermined period after said hold mode is selected, and wherein said hold mode control means sets said remote station to a standby mode after said predetermined time period has passed in said hold mode; and wherein
said remote station incorporates means for counting said predetermined time period and controlling said hold mode control means (133, 140, 240) so that the remote station can resume said standby mode at the expiry of said time period independently of communication between said base station and said remote station;
characterised in that said cordless telephone further comprises:
- means for establishing a low power standby mode in which said remote station (1) intermittently monitors at least one predetermined communication channel from among a plurality of communication channels and said base station (2) monitors all of said plurality of communication channels ;
- means automatically responsive to an interruption of a radio communication between said remote unit and said base unit for establishing a channel changing mode in which said base unit and said remote unit are changed to another of said communication channels ;
- means for establishing and releasing said hold mode ; and
- means for continuously monitoring said communication channel opened between said base station and said remote station for said predetermined period, after initiation of said hold mode so as to detect one of the mode control signals indicating:
i) termination of said radio communication,
ii) releasing of said hold mode, and
iii) establishing of said channel changing mode for changing of said communication channel opened between said base unit and said remote unit,
and, in the absence of detection of any of said mode control signals, for placing said remote unit in said standby mode after said predetermined period.

2. Cordless telephone according to claim 1, further comprising means operative in said hold mode for determining a condition in which the base unit (2) can no longer detect the radio signal (Su) from the remote station (1) and, when said condition is present, for causing the remote station to select a different channel.

3. Cordless telephone according to claim 1 or 2, further comprising :
- means for placing said master station in the hold mode when a hold operation is made on said master station ;
- means for causing said master station to open a communication channel between it and said remote station and to transmit a hold mode changing control signal to said remote station;
- means responsive to said hold mode changing control signal for placing said remote station in said hold mode.

4. Method of controlling a hold mode in a cordless telephone comprising a master station (2) connected to a telephone line network (3) and a remote station (1), wherein during a telephone communication a radio communication channel is opened between said master and remote stations to establish a telephone communication between said remote station and a third party, said method comprising the steps of
monitoring, during the hold mode, said communication channel between said master station and said remote station during a predetermined time period after said hold mode is selected,
setting said remote station to a standby mode after said predetermined time period has passed in said hold mode,
said monitoring step and the calculation of said predetermined time period being effected at said remote station (1), such that said standby mode can be resumed at the expiry of said time period independently of communication between said base station and said remote station;
characterised in that said method further comprises the steps of :
- establishing a low power standby mode in which said remote station (1) intermittently monitors at least one predetermined communication channel from among a plurality of communication channels and said base station (2) monitors all of said plurality of communication channels ;
- automatically responding to an interruption of a radio communication between said remote unit and said base unit for establishing a channel changing mode in which said base unit and said remote unit are changed to another of said communication channels ;
- establishing and releasing said hold mode ; and
- continuously monitoring said communication channel opened between said base station and said remote station for said predetermined period after initiation of said hold mode so as to detect one of the mode control signals indicating
i) termination of said radio communication,
ii) releasing of said hold mode, and
iii) establishing of said channel changing mode for changing of said communication channel opened between said base unit and said remote unit,
and, in the absence of detection of any of said mode control signals, for placing said remote unit in said standby mode after said predetermined period.

5. The method of claim 4, further comprising the steps of determining, during said hold mode, a condition in which the base unit (2) can no longer detect the radio signal (Su) from the remote station (1) and, when said condition is present, causing the remote station to select a different channel.

6. Method according to claim 4 or 5, further comprising the steps of :
- placing said master station in the hold mode when a hold operation is made on said master station;
- causing said master station to open a communication channel between it and said remote station and to transmit a hold mode changing control signal to said remote station; and
- responding to said hold mode changing control signal by placing said remote station in said hold mode.

## Patentansprüche

1. Schnurlos-Telefon, welches eine Feststation (2) umfaßt, die mit einem Telefonleitungsnetz (3) verbunden ist, und eine Mobilstation (1), wobei - während einer Telefonverbindung - ein Funkkommunikationskanal zwischen der Feststation und der Mobilstation geöffnet wird, um eine Telefonverbindung zwischen der Mobilstation und einer dritten Partei einzurichten, wobei das Schnurlos-Telefon eine Haltemodus-Steuereinrichtung (133, 140, 240) hat, wobei - während eines Haltemodus - der Kommunikationskanal zwischen der Feststation und der Mobilstation während einer vorgegebenen Zeitdauer überwacht wird, nachdem der Haltemodus ausgewählt wurde, und wobei die Haltemodus-Steuereinrichtung die Mobilstation auf einen Bereitschaftsmodus setzt, wenn die vorgegebene Zeitdauer im Haltemodus verstrichen ist; und wobei
die Mobilstation eine Einrichtung zum Zählen der vorgegebenen Zeitdauer hat und die Haltemodus-Steuereinrichtung (133, 140, 240) so steuert, daß die Mobilstation den Bereitschaftsmodus nach dem Ablauf der Zeitdauer unabhängig von der Verbindung zwischen der Feststation und der Mobilstation wieder aufnehmen kann;
dadurch gekennzeichnet, daß das Schnurlos-Telefon außerdem aufweist:
- eine Einrichtung zum Einrichten eines Niedrigleistung-Bereitschaftsmodus, in welchem die Mobilstation (1) intermittierend zumindest einen vorgegebenen Kommunikationskanal aus mehreren Kommunikationskanälen überwacht und die Feststation (2) alle der mehreren Kommunikationskanäle überwacht;
- eine Einrichtung, die automatisch auf eine Unterbrechung einer Funkkommunikation zwischen der Mobilstation und der Feststation anspricht, um einen Kanalwechselmodus einzurichten, bei welchem die Feststation und die Mobilstation auf einen anderen der Kommunikationskanäle wechseln;
- eine Einrichtung zum Einrichten und zum Lösen des Haltemodus; und
- eine Einrichtung zur laufenden Überwachung des Kommunikationskanals, der zwischen der Feststation und der Mobilstation eine vorgegebene Zeitdauer lang nach Beginn des Haltemodus geöffnet ist, um so eines der Modus-Steuersignale zu ermitteln, die anzeigen:
i) Beendigung der Funkkommunikation,
ii) Lösen des Haltemodus, und
iii) Einrichten des Kanal-Änderungsmodus zum Ändern des Kommunikationskanals, der zwischen der Feststation und der Mobilstation geöffnet ist,
und - beim Fehlen der Ermittlung eines der Modus-Steuersignale - Versetzen der Mobilstation in den Bereitschaftsmodus nach der vorgegebenen Periode.

2. Schnurlos-Telefon nach Anspruch 1, welches außerdem eine Einrichtung besitzt, die im Haltemodus arbeitet, um einen Zustand zu ermitteln, in welchem die Feststation (2) nicht mehr das Funksignal (Su) von der Mobilstation (1) ermitteln kann, und, wenn dieser Zustand vorhanden ist, die Mobilstation zu veranlassen, einen anderen Kanal auszuwählen.

3. Schnurlos-Telefon nach Anspruch 1 oder 2, welches außerdem aufweist:
- eine Einrichtung zum Versetzen der Feststation in den Haltemodus, wenn ein Haltebetrieb auf der Feststation durchgeführt wird;
- eine Einrichtung, die die Feststation veranlaßt, einen Kommunikationskanal zwischen ihr und der Mobilstation zu öffnen und ein Haltemodus-Änderungssteuersignal zur Mobilstation zu übertragen;
- eine Einrichtung, die auf das Haltemodus-Änderungssteuersignal anspricht, um die Mobilstation in den Haltemodus zu versetzen.

4. Verfahren zum Steuern eines Haltemodus bei einem Schnurlos-Telefon mit einer Feststation (2), die mit dem Telefonleitungsnetz (3) verbunden ist, und einer Mobilstation (1), wobei während einer Telefonkommunikation ein Funkkommunikationskanal zwischen der Feststation und der Mobilstationen geöffnet wird, um eine Telefonkommunikation zwischen der Mobilstation und einer dritten Partei einzurichten, wobei das Verfahren folgende Schritte aufweist:
Überwachen - während des Haltemodus - des Kommunikationskanals zwischen der Feststation und der Mobilstation während einer vorgegebenen Zeitdauer, nachdem der Haltemodus ausgewählt wurde,
Versetzen der Mobilstation in einen Bereitschaftsmodus, wenn die vorgegebene Zeitdauer im Haltemodus verstrichen ist,
wobei dieser Überwachungsschritt und die Berechnung der vorgegebenen Zeitdauer in der Mobilstation (1) durchgeführt wird, so daß der Bereitschaftsmodus bei dem Ablauf der Zeitdauer unabhängig von einer Kommunikation zwischen der Feststation und der Mobilstation wieder aufgenommen werden kann;
dadurch gekennzeichnet, daß das Verfahren außerdem folgende Schritte aufweist:
Einrichten eines Niedrigleistung-Bereitschaftsmodus, bei dem die Mobilstation (1) intermittierend zumindest einen vorgegebenen Kommunikationskanal aus mehreren Kommunikationskanälen überwacht und die Feststation (2) alle der mehreren Kommunikationskanäle überwacht;
automatisches Ansprechen auf eine Unterbrechung der Funkkommunikation zwischen der Mobilstation und der Feststation, um einen Kanaländerungsmodus einzurichten, bei dem die Feststation und die Mobilstation auf einen anderen der Kommunikationskanäle wechseln;
Einrichten und Lösen des Haltemodus; und
laufendes Überwachen des Kommunikationskanals, der zwischen der Feststation und der Mobilstation eine vorgegebene Zeitdauer lang nach dem Beginn des Haltemodus geöffnet ist, um so eines der Modus-Steuersignale zu ermitteln, die anzeigen:
i) Beendigung der Funkverbindung,
ii) Lösen des Haltemodus, und
iii) Einrichten des Kanaländerungsmodus zum Ändern des Kommunikationskanals, der zwischen der Feststation und der Mobilstation geöffnet ist,
und bei einem Nicht-Vorhandensein der Ermittlung eines der Modus-Steuersignale Versetzen der Mobilstation in den Bereitschaftsmodus nach der vorgegebenen Periode.

5. Verfahren nach Anspruch 4, welches außerdem die Schritte zum Bestimmen - während des Haltemodus - eines Zustandes aufweist, in welchem die Feststation (2) nicht mehr das Funksignal (Su) von der Mobilstation (1) ermitteln kann, und, wenn dieser Zustand vorhanden ist, die Mobilstation zu veranlassen, einen anderen Kanal auszuwählen.

6. Verfahren nach Anspruch 4 oder 5, welches außerdem folgende Schritte aufweist:
- Versetzen der Feststation in den Haltemodus, wenn ein Haltebetrieb bei der Feststation durchgeführt wird;
- Veranlassen, daß die Feststation einen Kommunikationskanal zwischen ihr und der Mobilstation öffnet und um ein Haltemodus-Änderungssteuersignal zur Mobilstation zu übertragen; und
- Antworten auf das Haltemodus-Änderungssteuersignal, wobei die Mobilstation in den Haltemodus versetzt wird.

## Revendications

1. Téléphone sans fil comprenant une station maître (2) connectée à un réseau de ligne téléphonique (3) et une station à distance (1), où, pendant une communication téléphonique, un canal de communication radio est ouvert entre lesdites stations maître et à distance afin d'établir une communication téléphonique entre ladite station à distance et une tierce partie, ledit téléphone sans fil comportant un moyen de commande de mode maintien (133, 140, 240) dans lequel, pendant un mode maintien, ledit canal de communication entre ladite station maître et ladite station à distance est surveillé pendant une période prédéterminée après que ledit mode maintien est sélectionné et dans lequel ledit moyen de commande de mode maintien établit ladite station à distance dans un mode attente après que ladite période temporelle prédéterminée s'est écoulée dans ledit mode maintien ; et dans lequel :
ladite station à distance incorpore un moyen pour compter ladite période temporelle prédéterminée et pour commander ledit moyen de commande de mode maintien (133, 140, 240) de telle sorte que la station à distance puisse reprendre ledit mode attente à l'expiration de ladite période temporelle indépendamment de la communication entre ladite station de base et ladite station à distance,
caractérisé en ce que ledit téléphone sans fil comprend en outre :
- un moyen pour établir un mode attente faible consommation dans lequel ladite station à distance (1) surveille par intermittence au moins un canal de communication prédéterminé pris parmi une pluralité de canaux de communication et ladite station de base (2) surveille la totalité de ladite pluralité de canaux de communication ;
- un moyen répondant automatiquement à une interruption d'une communication radio entre ladite unité à distance et ladite unité de base pour établir un mode changement de canal dans lequel ladite unité de base et ladite unité à distance sont passées sur un autre canal desdits canaux de communication ;
- un moyen pour établir et libérer ledit mode maintien ; et
- un moyen pour surveiller en continu ledit canal de communication ouvert entre ladite station de base et ladite station à distance pendant ladite période prédéterminée après l'initiation dudit mode maintien de manière à détecter l'un des signaux de commande de mode indiquant :
i) la fin de ladite communication radio ;
ii) la libération dudit mode maintien ; et
iii) l'établissement dudit mode changement de canal pour changer ledit canal de communication ouvert entre ladite unité de base et ladite unité à distance ;
et, en l'absence de la détection de l'un quelconque desdits signaux de commande de mode, pour placer ladite unité à distance dans ledit mode attente après ladite période prédéterminée.

2. Téléphone sans fil selon la revendication 1, comprenant en outre un moyen fonctionnant dans ledit mode maintien pour déterminer une condition dans laquelle l'unité de base (2) ne peut plus détecter le signal radio (Su) provenant de la station à distance (1) et, lorsque ladite condition est présente, pour faire de sorte que la station à distance sélectionne un canal différent.

3. Téléphone sans fil selon la revendication 1 ou 2, comprenant en outre :
- un moyen pour placer ladite station maître dans le mode maintien lorsqu'une opération de maintien est réalisée sur ladite station maître ;
- un moyen pour faire de sorte que ladite station maître ouvre un canal de communication entre elle et ladite station à distance et à transmettre un signal de commande de changement de mode maintien à ladite station à distance ; et
- un moyen répondant audit signal de commande de changement de mode maintien pour placer ladite station à distance dans ledit mode maintien.

4. Procédé de commande d'un mode maintien dans un téléphone sans fil comprenant une station maître (2) connectée à un réseau de ligne téléphonique (3) et une station à distance (1), où, pendant une communication téléphonique, un canal de communication radio est ouvert entre lesdites stations maître et à distance afin d'établir une communication téléphonique entre ladite station à distance et une tierce partie, ledit procédé comprenant les étapes de :
surveillance, pendant le mode maintien, dudit canal de communication entre ladite station maître et ladite station à distance pendant une période temporelle prédéterminée après que ledit mode maintien est sélectionné ;
établissement de ladite station à distance dans un mode attente après que ladite période temporelle prédéterminée s'est écoulée dans ledit mode maintien ;
ladite étape de surveillance et le calcul de ladite période temporelle prédéterminée étant réalisés au niveau de ladite station à distance (1), de telle sorte que ledit mode attente puisse être repris à l'expiration de ladite période temporelle indépendamment de la communication entre ladite station de base et ladite station à distance,
caractérisé en ce que ledit procédé comprend en outre les étapes de :
- établissement d'un mode attente faible consommation dans lequel ladite station à distance (1) surveille par intermittence au moins un canal de communication prédéterminé pris parmi une pluralité de canaux de communication et ladite station de base (2) surveille la totalité de ladite pluralité de canaux de communication ;
- réponse de façon automatique à une interruption d'une communication radio entre ladite unité à distance et ladite unité de base pour établir un mode changement de canal dans lequel ladite unité de base et ladite unité à distance sont passées sur un autre canal desdits canaux de communication ;
- établissement et libération dudit mode maintien ; et
- surveillance en continu dudit canal de communication ouvert entre ladite station de base et ladite station à distance pendant ladite période prédéterminée après l'initiation dudit mode maintien de manière à détecter l'un des signaux de commande de mode indiquant :
i) la fin de ladite communication radio ;
ii) la libération dudit mode maintien ; et
iii) l'établissement dudit mode changement de canal pour changer ledit canal de communication ouvert entre ladite unité de base et ladite unité à distance ;
et, en l'absence de la détection de l'un quelconque desdits signaux de commande de mode, pour placer ladite unité à distance dans ledit mode attente après ladite période prédéterminée.

5. Procédé selon la revendication 4, comprenant en outre l'étape de détermination, pendant ledit mode maintien, d'une condition dans laquelle l'unité de base (2) ne peut plus détecter le signal radio (Su) provenant de la station à distance (1) et, lorsque ladite condition est présente, l'étape consistant à faire en sorte que la station à distance sélectionne un canal différent.

6. Procédé selon la revendication 4 ou 5, comprenant en outre les étapes de :
- placement de ladite station maître dans le mode maintien lorsqu'une opération de maintien est réalisée sur ladite station maître ;
- commande de ladite station maître pour faire en sorte qu'elle ouvre un canal de communication entre elle et ladite station à distance et transmet un signal de commande de changement de mode maintien à ladite station à distance ; et
- réponse audit signal de commande de changement de mode maintien en plaçant ladite station à distance dans ledit mode maintien.
